(19) Europäisches Patentamt
European Patent Office
Office européen des brevets

(11) **EP 4 678 366 A1**

(12) **EUROPEAN PATENT APPLICATION**
published in accordance with Art. 153(4) EPC

(43) Date of publication:
**14.01.2026 Bulletin 2026/03**

(21) Application number: **24774499.8**

(22) Date of filing: **13.02.2024**

(51) International Patent Classification (IPC):
*B29B 7/84* (2006.01)　　*B29B 7/38* (2006.01)
*B29B 7/48* (2006.01)　　*B29B 7/72* (2006.01)
*B29B 7/80* (2006.01)　　*B29B 7/88* (2006.01)
*B29C 48/29* (2019.01)　　*B29C 48/40* (2019.01)
*B29C 48/58* (2019.01)　　*B29C 48/76* (2019.01)
*B29C 48/92* (2019.01)　　*B29C 48/285* (2019.01)
*B29C 48/395* (2019.01)

(52) Cooperative Patent Classification (CPC):
**B29B 7/38; B29B 7/48; B29B 7/72; B29B 7/80;
B29B 7/84; B29B 7/88; B29C 48/285; B29C 48/29;
B29C 48/395; B29C 48/40; B29C 48/58;
B29C 48/76; B29C 48/92**

(86) International application number:
**PCT/JP2024/004727**

(87) International publication number:
**WO 2024/195353 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.03.2023 JP 2023047221
16.11.2023 JP 2023195268**

(71) Applicants:
• **Kabushiki Kaisha Toyota Chuo Kenkyusho
Nagakute-shi, Aichi 480-1192 (JP)**
• **TOYOTA BOSHOKU KABUSHIKI KAISHA
Kariya-shi, Aichi 448-8651 (JP)**
• **Toyoda Gosei Co., Ltd.
Kiyosu-shi, Aichi 452-8564 (JP)**

(72) Inventors:
• **KATAGIRI Yoshihide
Nagakute-shi, Aichi 480-1192 (JP)**
• **OHSHIMA Ayako
Nagakute-shi, Aichi 480-1192 (JP)**

• **HIRAI Takayuki
Nagakute-shi, Aichi 480-1192 (JP)**
• **OKAMOTO Hirotaka
Nagakute-shi, Aichi 480-1192 (JP)**
• **OTA Masashi
Kariya-shi, Aichi 480-1192 (JP)**
• **WADA Suguru
Kariya-shi, Aichi 480-1192 (JP)**
• **MIYAKE Shuhei
Kariya-shi, Aichi 480-1192 (JP)**
• **ASAI Toshihiro
Kariya-shi, Aichi 480-1192 (JP)**
• **UCHIDA Hitoshi
Kiyosu-shi, Aichi 452-8564 (JP)**
• **SOBUE Fumiyasu
Kiyosu-shi, Aichi 452-8564 (JP)**
• **FURUKAWA Kinji
Kiyosu-shi, Aichi 452-8564 (JP)**
• **MIZUKOSHI Mao
Kiyosu-shi, Aichi 452-8564 (JP)**

(74) Representative: **Kramer Barske Schmidtchen
Patentanwälte PartG mbB
European Patent Attorneys
Landsberger Strasse 300
80687 München (DE)**

(54) **METHOD FOR PRODUCING RESIN COMPOSITION AND DEVICE FOR PRODUCING RESIN COMPOSITION**

(57) A method for manufacturing a resin composition, comprising: a step of preparing a specific kneading extruder comprising a cylinder (1) in which a devolatilization aid supply port (11A and 11B) and a devolatilization port for emitting volatile components (12A and 12B) are provided so as to satisfy specific conditions, and a screw

EP 4 678 366 A1

(2) having a specific screw configuration in which seal rings ($SR_{1-4}$) are disposed at specific positions; and a conveying and kneading step of conveying and kneading a raw material supplied into the cylinder (1) using the kneading extruder; wherein a resin composition is obtained by setting a filling factor of the raw material to 70% or more in at least one region among specific regions ($A_1$ and $A_2$) within the cylinder (1), supplying a devolatilization aid (DA) to the raw material within the cylinder (1) from the devolatilization aid supply port (11A and 11B), and emitting volatile components that had been contained in the raw material from the devolatilization port (12A and 12B).

Fig. 6

**Description**

[Technical Field]

The present invention relates to a method for manufacturing a resin composition and an apparatus for manufacturing a resin composition.

[Background Art]

Conventionally, in the field of resin compositions, it has been proposed to manufacture a resin composition using a kneading extruder capable of devolatilization processing in order to volatilize and remove volatile organic compounds (VOCs), such as residual solvents and residual monomers, contained in the composition. In recent years, from the viewpoint of environmental protection and the like, there has been a strong social demand to reuse resin compositions by recycling, and it is required to recycle and utilize resin compositions. When manufacturing such recycled resin compositions, it has also been proposed to manufacture (regenerate) the resin composition using a kneading extruder capable of devolatilization processing in order to remove volatile organic compounds contained in the resin composition.

As a method for manufacturing a resin composition using such a kneading extruder capable of devolatilization processing, for example, Patent Literature 1 (Japanese Unexamined Patent Application Publication No. 2021-62552) discloses a method for manufacturing a resin composition having: a step (a) of preparing an extruder that has a cylinder, a screw rotatably disposed within the cylinder, and a rotation drive mechanism for rotating the screw, wherein a melt-kneading part and a devolatilization part are sequentially arranged from an upstream side; a step (b) of kneading a molten resin, which is obtained by melting a thermoplastic resin, with an additive in the melt-kneading part of the extruder; a step (c) of adding and kneading a devolatilization aid in a first part of the devolatilization part of the extruder to thereby disperse the devolatilization aid in the thermoplastic resin; and a step (d) of creating a reduced pressure state in a second part of the devolatilization part of the extruder to thereby remove volatile components from a kneaded product of the thermoplastic resin and the additive together with the devolatilization aid. Furthermore, Non-Patent Literature 1 (leaflet (NL-J0014-02) from the Plastics Machinery Division of the Hiroshima Plant, The Japan Steel Works, Ltd., "Introduction to TEX water addition devolatilization effect," Internet <URL: https://www.jsw.co.jp/ja/product/news/details/2021100100 0006.html>) discloses a technology using a kneading extruder provided with seal rings before and after a water addition portion, as a screw design suitable for low-viscosity resins.

[Citation List]

[Patent Literature]

[PTL 1] Japanese Unexamined Patent Application Publication No. 2021-62552

[Non Patent Literature]

[NPL 1] Leaflet (NL-J0014-02) from the Plastics Machinery Division of the Hiroshima Plant, The Japan Steel Works, Ltd., "Introduction to TEX water addition devolatilization effect," Internet <URL: https://www.ipros.jp/catalog/detail/ 557129/>

[Summary of Invention]

[Technical Problem]

However, conventional methods for manufacturing a resin composition, such as those described in Patent Literature 1 and Non-Patent Literature 1, have not been sufficient in terms of reducing the residual amount of volatile organic compounds in the resulting resin composition.

The present invention has been made in view of the problems of the prior art, and an object of the present invention is to provide a method for manufacturing a resin composition that can efficiently manufacture a resin composition with a sufficiently low residual amount of volatile organic compounds, and an apparatus for manufacturing a resin composition that can be suitably used for the method.

[Solution to Problem]

As a result of diligent research conducted by the present inventors to achieve the aforementioned object, the present inventors prepared a kneading extruder that comprises a cylinder and a screw disposed within the cylinder; wherein the cylinder has at least one devolatilization aid supply port and at least one devolatilization port for emitting volatile components as openings, and has at least one structural portion in which the devolatilization aid supply port and the devolatilization port are arranged spaced apart in order from an upstream side; the screw has at least one screw configuration in which seal rings are respectively disposed in a supply port upstream portion within the cylinder located upstream of a position where the devolatilization aid supply port of the at least one structural portion is provided, and in a supply port downstream portion located between the devolatilization aid supply port and the devolatilization port of the structural portion; and in a region between the supply port upstream portion and the supply port downstream portion where the seal rings are disposed, no opening that communicates the region with an outside of the cylinder is provided, other than the devolatilization aid supply port that serves as a reference for the positions of the supply port upstream portion and the supply port downstream portion; used the kneading extruder for manufacturing a resin composition; and when kneading, while conveying, a raw material of the resin composition supplied into the cylinder by the screw from an upstream side to a downstream side, set a filling factor of the raw material to 70% or more in at least one region within the cylinder between the supply port upstream portion and the supply port downstream portion where the seal rings are disposed, and also supplied a devolatilization aid to the raw material within the cylinder from the devolatilization aid supply port while emitting volatile components that had been contained in the raw material from the devolatilization port. The present inventors found that this makes it possible to efficiently and reliably manufacture a resin composition with a sufficiently low residual amount of volatile organic compounds, and thereby completed the present invention.

That is, the present invention provides the following aspects.

[1] A method for manufacturing a resin composition, comprising:

a kneading extruder preparation step of preparing a kneading extruder that comprises a cylinder and a screw disposed within the cylinder,

the cylinder having at least one devolatilization aid supply port and at least one devolatilization port for emitting volatile components as openings, and having at least one structural portion in which the devolatilization aid supply port and the devolatilization port are arranged spaced apart in order from an upstream side,

the screw having at least one screw configuration in which seal rings are respectively disposed in a supply port upstream portion within the cylinder located upstream of a position where the devolatilization aid supply port of the at least one structural portion is provided, and in a supply port downstream portion located between the devolatilization aid supply port and the devolatilization port of the structural portion, and

in a region between the supply port upstream portion and the supply port downstream portion where the seal rings are disposed, no opening that communicates the region with an outside of the cylinder is provided, other than the devolatilization aid supply port that serves as a reference for the positions of the supply port upstream portion and the supply port downstream portion; and

a conveying and kneading step of using the kneading extruder to knead, while conveying, a raw material of the resin composition supplied into the cylinder by the screw from an upstream side to a downstream side,

wherein, in the conveying and kneading step, a resin composition is obtained by setting a filling factor of the raw material to 70% or more in at least one region within the cylinder between the supply port upstream portion and the supply port downstream portion where the seal rings are disposed, supplying a devolatilization aid to the raw material within the cylinder from the devolatilization aid supply port, and emitting volatile components that had been contained in the raw material from the devolatilization port.

[2] The method for manufacturing a resin composition according to [1], wherein in the conveying and kneading step, the filling factor of the raw material in the region within the cylinder between the supply port upstream portion and the supply port downstream portion where the seal rings are disposed is 80% or more.

[3] The method for manufacturing a resin composition according to [1] or [2], wherein the devolatilization aid is water.

[4] An apparatus for manufacturing a resin composition, comprising a kneading extruder that includes:

a cylinder;
a screw disposed within the cylinder;
a screw-drive device for driving the screw;
a raw material supply device for supplying a raw material into the cylinder;
a devolatilization aid supply device for supplying a devolatilization aid into the cylinder;
a temperature adjustment device for adjusting a temperature of the cylinder; and
a control device that is electrically connected to the screw-drive device, the raw material supply device, the devolatilization aid supply device, and the temperature adjustment device, and is for controlling operation of each of the devices,

the cylinder having at least one devolatilization aid supply port and at least one devolatilization port for emitting volatile components as openings, and having at least one structural portion in which the devolatilization aid supply port and the devolatilization port are arranged spaced apart in order from an upstream side,

the screw having at least one screw configuration in which seal rings are respectively disposed in a supply port upstream portion within the cylinder located upstream of a position where the devolatilization aid supply port of the at least one structural portion is provided, and in a supply port downstream portion located between the devolatilization aid supply port and the devolatilization port of the structural portion,

the kneading extruder satisfying a condition that in a region between the supply port upstream portion and the supply port downstream portion where the seal rings are disposed, no opening that communicates the region with an outside of the cylinder is provided, other than the devolatilization aid supply port that serves as a reference for the positions of the supply port upstream portion and the supply port downstream portion,

the kneading extruder being an apparatus used for manufacturing a resin composition by kneading, while conveying, a raw material of the resin composition supplied into the cylinder by the screw from an upstream side to a downstream side, and

the control device being configured to, when manufacturing the resin composition and when kneading, while conveying, the raw material from the upstream side to the downstream side, control operation of the screw-drive device, the raw material supply device, the devolatilization aid supply device, and the temperature adjustment device so as to supply a devolatilization aid to the raw material within the cylinder from the devolatilization aid supply port and emit volatile components that had been contained in the raw material from the devolatilization port, while setting a filling factor of the raw material to 70% or more in at least one region within the cylinder between the supply port upstream portion and the supply port downstream portion where the seal rings are disposed.

[5] The apparatus for manufacturing a resin composition according to [4], wherein the kneading extruder further comprises a vacuum device connected to the devolatilization port,

the control device is also electrically connected to the vacuum device, and

the control device, when manufacturing the resin composition, controls operation of the screw-drive device, the raw material supply device, the devolatilization aid supply device, and the temperature adjustment device, and also controls operation of the vacuum device.

Although the reason why the above-described object is achieved by the method for manufacturing a resin composition and the apparatus for manufacturing a resin composition of the present invention is not necessarily clear, the present inventors speculate as follows. That is, first, the present inventors conducted diligent research and examined the technologies described in the aforementioned Patent Literature 1 and Non-Patent Literature 1. They came to consider that with a technology such as that described in Patent Literature 1, the pressure inside the cylinder cannot be sufficiently raised when kneading the raw material to which the devolatilization aid has been added. Due to this, the devolatilization aid in the raw material enters a gaseous state even before devolatilization using a vacuum pump (pressure-reducing pump) from the devolatilization vent, which prevents the liquid devolatilization aid from being sufficiently dispersed in the raw material, thereby resulting in an inability to sufficiently remove volatile organic compounds. Furthermore, the present inventors came to consider that when a kneading extruder such as that described in Non-Patent Literature 1 is used, depending on the conditions of use of the kneading extruder (for example, the feed rate of the raw material into the cylinder, and the like), the pressure inside the cylinder during kneading with the addition of the devolatilization aid cannot necessarily be sufficiently raised, and due to this, volatile organic compounds cannot necessarily be sufficiently removed. As such, as a result of diligent research, the present inventors considered that in conventional methods for manufacturing a resin composition, such as those described in Patent Literature 1 and Non-Patent Literature 1, there is a problem with the pressure inside the cylinder during kneading with the addition of a devolatilization aid. Then, in consideration of such a problem, in the present invention, a specific kneading extruder according to the present invention as described above is used, and the filling factor of the raw material in at least one region within the cylinder between the supply port upstream portion and the supply port downstream portion where the seal rings are disposed (a region sandwiched by two seal rings: a region for kneading the raw material including the devolatilization aid after adding the devolatilization aid) is set to 70% or more. As a result, when the devolatilization aid is supplied to the raw material within the cylinder from the devolatilization aid supply port, the pressure in that region of the cylinder is maintained sufficiently high, and the occurrence of the problem of the devolatilization aid volatilizing due to low pressure in the region is sufficiently suppressed, regardless of the feed rate of the raw material into the kneading extruder's cylinder. Therefore, when kneading the raw material and the devolatilization aid, it becomes possible to knead the liquid devolatilization aid and the raw material under high-pressure conditions. This makes it possible to sufficiently maintain the liquid state of the devolatilization aid, and to more sufficiently disperse the devolatilization aid more uniformly throughout the raw material (raw material of the molten resin composition). Consequently, when devolatilizing volatile components (gas in which volatile organic compounds, devolatilization aid, etc., have volatilized) from the devolatilization port located in a region further downstream than the seal ring of the supply port downstream portion, it becomes possible to emit (devolatilize) the volatile organic compounds at a higher level and more efficiently. The present inventors speculate that, due to this, it becomes possible to efficiently manufacture a resin composition with a sufficiently low residual amount of volatile organic compounds.

[Advantageous Effects of Invention]

According to the present invention, it is possible to provide a method for manufacturing a resin composition that can efficiently manufacture a resin composition with a sufficiently low residual amount of volatile organic compounds, and an apparatus for manufacturing a resin composition that can be suitably used for the method.

[Brief Description of Drawings]

[Fig. 1] Fig. 1 is a schematic cross-sectional view schematically showing a cross-section of a preferred embodiment of a kneading extruder that can be used in the method for manufacturing a resin composition of the present invention.
[Fig. 2] Fig. 2 is a schematic cross-sectional view schematically showing a cross-section of another preferred embodiment of a kneading extruder that can be used in the method for manufacturing a resin composition of the present invention.
[Fig. 3] Fig. 3 is a schematic cross-sectional view schematically showing a cross-section of a different preferred embodiment of a kneading extruder that can be used in the method for manufacturing a resin composition of the present invention.
[Fig. 4] Fig. 4 is a schematic cross-sectional view schematically showing a cross-section of a preferred embodiment of the apparatus for manufacturing a resin composition of the present invention.
[Fig. 5] Fig. 5 is a flowchart showing an example of a preferred procedure for determining necessary operating conditions using kneading simulation software (product of The Japan Steel Works, Ltd., trade name: TEX-FAN).
[Fig. 6] Fig. 6 is a schematic cross-sectional view schematically showing a cross-section of a kneading extruder used in Comparative Examples 1-2.

[Description of Embodiments]

Hereinafter, preferred embodiments of the present invention will be described in detail while referencing the drawings. In the following description and drawings, the same or corresponding elements are denoted by the same reference numerals, and redundant descriptions will be omitted.

[Regarding a Preferred Embodiment of the Method for Manufacturing a Resin Composition of the Present Invention]

(First Embodiment)

<Kneading Extruder Preparation Step>

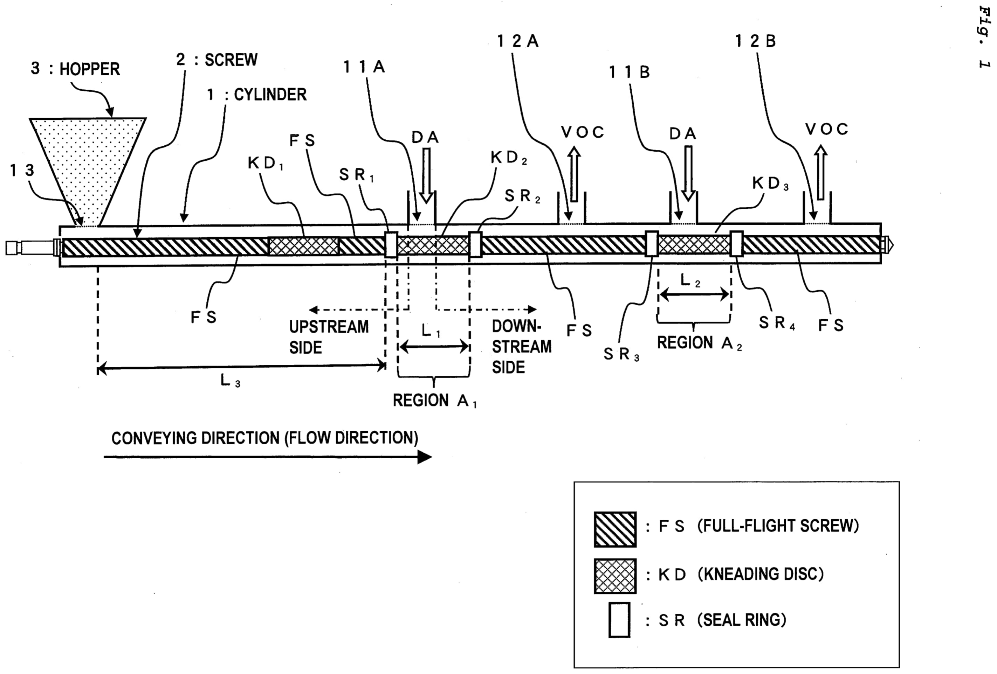

In the present invention, a kneading extruder is prepared in the kneading extruder preparation step. Fig. 1 is a schematic cross-sectional view schematically showing a cross-section of a preferred embodiment of such a kneading extruder according to the present invention. In this specification, when explaining the positional relationship of each component (such as screw elements), the expressions "upstream" and "downstream" or "upstream side" and "downstream side" are used with respect to the conveying direction (flow direction) of the raw material of the resin composition (including the melt-kneaded product).
The kneading extruder of the embodiment shown in Fig. 1 is a twin-screw kneading extruder (screw-type kneading devolatilizing extruder) comprising a cylinder 1, a screw 2 disposed within the cylinder 1, and a hopper 3 for raw material supply connected to an upstream portion of the cylinder 1 (in Fig. 1, for convenience, only the screw on one shaft side is depicted). The screw 2 is connected to a rotation drive mechanism, not shown, and is in a state where it can rotate (is freely rotatable) inside the cylinder 1. In the kneading extruder shown in Fig. 1, a downstream end portion of the cylinder 1 is connected to a die, not shown, and during its use, it is designed such that the melt-kneaded resin composition is extruded (discharged) from this die to obtain a resin composition from which VOCs have been devolatilized. Furthermore, in the kneading extruder of the form shown in Fig. 1, a heater, not shown, is installed on an outside of all regions of the cylinder 1, and it is thereby designed such that it becomes possible to knead the raw material while heating the cylinder to a heating temperature (set temperature) appropriately set according to the type of raw material, thereby melting the raw material.

The cylinder 1 is provided with devolatilization aid supply ports (DA supply ports) 11A and 11B for supplying a devolatilization aid DA, and devolatilization ports (vent ports) 12A and 12B for emitting a devolatilized component VOC, as openings. These DA supply ports 11A and 11B are each connected to a supply device for the devolatilization aid DA, not shown (for example, if the devolatilization aid DA is water, a device capable of water injection (a water injection device)). The devolatilization ports 12A and 12B are each connected to a vacuum device (vacuum pump), not shown. In Fig. 1, for the supply of the raw material (raw material of the resin composition) from the hopper 3, the cylinder 1 is also provided with an opening for raw material supply (raw material supply port) 13.

As described, the cylinder 1 is provided with two DA supply ports 11A and 11B, two devolatilization ports (vent ports) 12A and 12B, and a raw material supply port 13, as openings. From the arrangement relationship of the two DA supply ports and the two devolatilization ports, this cylinder 1 has a structural portion in which the DA supply port 11A and the devolatilization port 12A are arranged spaced apart in order from the upstream side toward the downstream side, and, in a region further downstream of that structural portion, a structural portion in which the DA supply port 11B and the devolatilization port 12B are arranged spaced apart in order from the upstream side toward the downstream side. By having such structural portions, it becomes possible in each structural portion to knead the raw material with the devolatilization aid DA introduced from the DA supply port, and then convey the kneaded product to a region where a devolatilization port is provided to perform devolatilization. In combination with the screw configuration and the like to be described later, this makes it possible to emit (devolatilize) the volatile organic compound VOC as a volatile component from the devolatilization port at a higher level and more efficiently.

The ratio of the length to the diameter (length/diameter) of the cylinder 1 is preferably 21 to 106 from the viewpoint that it becomes possible to remove VOCs more efficiently. The diameter of the cylinder 1 is preferably 12 to 90 mm from the viewpoint that even when the raw material is in pellet form, no particular problem occurs in kneading the pellets, and it becomes possible to more sufficiently suppress heat generation during kneading.

The screw 2 is formed by attaching various screw elements (screw segments: screw pieces) to a shaft. The screw 2 has a screw configuration in which a full-flight screw FS, kneading discs KD (in Fig. 1, $KD_{1-3}$ are used as reference numerals), and seal rings SR (in Fig. 1, $SR_{1-4}$ are used as reference numerals) are disposed on the shaft in the arrangement shown in Fig. 1 (a configuration arranged in the order of FS, $KD_1$, FS, $SR_1$, $KD_2$, $SR_2$, FS, $SR_3$, $KD_3$, $SR_4$, FS from the upstream side toward the downstream side). The full-flight screw FS is mainly used for conveying the raw material of the resin composition from the upstream side to the downstream side, the kneading disc KD is used for kneading (melt-kneading) the raw material, and the seal ring SR is used for damming the flow of the raw material to increase the pressure of the raw material in the cylinder.

Here, regarding the configuration of the screw 2, the positional relationship of the portions where each seal ring is disposed in the part of the screw configuration where the seal ring $SR_1$, the kneading disc $KD_2$, and the seal ring $SR_2$ are arranged in order will be explained based on the positions of the DA supply port 11A and the devolatilization port 12A of the cylinder 1. The seal ring $SR_1$ is disposed at a position upstream of the position where the DA supply port 11A is provided (upstream of an upstream end of the DA supply port 11A). The seal ring $SR_2$ is disposed at a position downstream of the position where the DA supply port 11A is provided (downstream of a downstream end of the DA supply port 11A), and at a position between the DA supply port 11A and the devolatilization port 12A. That is, focusing on the structural portion of the cylinder 1 where the DA supply port 11A and the devolatilization port 12A are arranged side by side, and considering the positional relationship of the arrangement of the seal rings SR, the screw 2 has a screw configuration in which the seal ring $SR_1$ is disposed upstream of the position where the DA supply port 11A of the cylinder 1 is provided (a portion upstream of the DA supply port 11A where the seal ring $SR_1$ within the cylinder 1 is disposed is referred to as a "supply port upstream portion"), and the seal ring $SR_2$ is disposed between the DA supply port 11A and the devolatilization port 12A (downstream of the DA supply port 11A) (a portion downstream of the DA supply port 11A where the seal ring $SR_2$ within the cylinder 1 is disposed is referred to as a "supply port downstream portion"). On the other hand, in a region $A_1$ between the supply port upstream portion (a portion where the seal ring upstream of the reference devolatilization aid supply port is disposed) and the supply port downstream portion (a portion where the seal ring downstream of the reference devolatilization aid supply port is disposed), no opening that communicates the region $A_1$ with an outside of the cylinder 1 is provided, other than the DA supply port 11A (an opening that serves as a reference for the positions of the supply port upstream portion and the supply port downstream portion). (Here, the "region $A_1$" based on the DA supply port 11A means the region within the cylinder sandwiched between a plane that includes the downstream end face of the seal ring $SR_1$ and is perpendicular to the axis of the cylinder (a plane that includes the upstream end of the kneading disc $KD_2$ and is perpendicular to the axis of the cylinder) and a plane that includes the upstream end face of the seal ring $SR_2$ and is perpendicular to the axis of the cylinder (a plane that includes the downstream end of the kneading disc $KD_2$ and is perpendicular to the axis of the cylinder). As such, in this specification, "the region within the cylinder between the supply port upstream portion and the supply port downstream portion where the seal rings are disposed" means the region within the cylinder sandwiched between a plane that includes the downstream end face of the seal ring disposed in the supply port upstream portion (the upstream seal ring) and is perpendicular to the axis of the cylinder and a plane that includes the upstream end face of the seal ring disposed in the supply port downstream portion and is in a direction perpendicular to the axis of the cylinder). Furthermore, focusing on the arrangement positions of the seal rings $SR_{3-4}$ based on the structural portion of the cylinder 1 where the DA supply port 11B and the devolatilization port 12B are arranged side by side, in this embodiment, it has a screw configuration in which the seal ring $SR_3$ and the seal ring $SR_4$ are respectively disposed in a supply port upstream portion upstream of the position where the DA supply port 11B is provided (a portion upstream of the DA supply port 11B) and in a supply port downstream portion between the DA supply port 11B and the devolatilization port 12B and downstream of the DA supply port 11B (a portion downstream of the DA supply port 11B). Also, in a region $A_2$ between the supply port upstream portion and the supply port downstream portion within the cylinder 1 when focusing on the seal rings $SR_{3-4}$, no opening is provided other than the DA supply port 11B (an opening that serves as a reference for the positions of the supply port upstream portion and the supply port downstream portion). Therefore, in the kneading extruder of the embodiment shown in Fig. 1, the region $A_1$ and the region $A_2$ become zones for adding (supplying) and kneading the devolatilization aid DA (preferably water). Thus, the region within the cylinder between the supply port upstream portion and the supply port downstream portion where the seal rings are disposed ($A_1$, $A_2$), which becomes a zone for adding (supplying) and kneading the devolatilization aid DA, is hereinafter, for convenience, sometimes referred to simply as the "DA addition and kneading region."

The diameter D of the screw 2 is not particularly limited, but is preferably 80 to 99.5% of the diameter of the cylinder 1. When the ratio of the diameter D of the screw 2 to the diameter of the cylinder 1 is at least the lower limit, the resin composition tends to be kneaded more sufficiently compared to when it is less than the lower limit. On the other hand, when it is no more than the upper limit, interference between the screw and the cylinder is less likely to occur structurally (basically no interference occurs) compared to when it exceeds the upper limit, and thus more stable processing tends to be possible.

Such a screw 2 is not particularly limited, but when L is the length (total length) of the screw and D is the diameter (outer diameter) of the screw, the L/D value of the screw is preferably 20 to 105, and more preferably 25 to 100. When such an L/D value is at least the lower limit, the resin composition tends to be kneaded more sufficiently compared to when it is less than the lower limit. On the other hand, when it is no more than the upper limit, an excessive increase in kneading torque can be suppressed, and more stable processing tends to be possible compared to when it exceeds the upper limit. The "length of the screw" referred to here means the total length of the portion where the screw elements are disposed, that is, the total length in the conveying direction of the portion that functions as a screw formed by combining a plurality of elements.

In the screw 2, it is preferable that a ratio ($L_1/D$) of a length $L_1$ of the screw in a range sandwiched between a downstream end of the seal ring $SR_1$ and an upstream end of the seal ring $SR_2$ (a length between the downstream end of the seal ring $SR_1$ and the upstream end of $SR_2$) to the diameter D of the screw is 2 or more (more preferably 5 to 50). It is also preferable that a ratio ($L_2/D$) of a length $L_2$ of the screw in a range sandwiched between a downstream end of the seal ring $SR_3$ and an upstream end of the seal ring $SR_4$ (a length between the downstream end of the seal ring $SR_3$ and the upstream end of $SR_4$) to the diameter D of the screw is also 2 or more (more preferably 2 to 50). As such, it is preferable that the ratio ($L_1/D$ or $L_2/D$) of the length of the screw ($L_1$ or $L_2$) in the range sandwiched between the downstream end of the seal ring ($SR_1$ or $SR_3$) in its supply port upstream portion and the upstream end of the seal ring ($SR_2$ or $SR_4$) in its supply port downstream portion to the diameter D of the screw is 2 or more (more preferably 2 to 50), with one DA supply port (11A or 11B) as a reference. If such a value of $L_1/D$ or $L_2/D$ is less than the lower limit, the kneading of the devolatilization aid and the resin composition tends to be insufficient. When the value of $L_1/D$ is no more than the upper limit, an excessive increase in kneading torque can be better suppressed, and more stable processing tends to be possible compared to when it exceeds the upper limit.

Furthermore, in such a screw 2, the length (distance in the conveying direction) of the region where the kneading disc $KD_1$ is disposed (which becomes the region where the raw material is first kneaded) may be appropriately designed according to the type of raw material and the like, and is not particularly limited. However, so that it becomes possible to more reliably supply the raw material in a molten state to the region $A_1$ (DA addition and kneading region), it is preferable to have a length of 1 to 30 times (more preferably 2 to 25 times) the diameter D of the screw.

In the kneading extruder of the above embodiment, the raw material (melt-kneaded product) conveyed downstream after passing through the site of the devolatilization port 12A is dammed by the seal ring $SR_3$ disposed downstream of the devolatilization port 12A, and its conveying speed is slowed. However, depending on the positional relationship between the devolatilization port 12A and the seal ring $SR_3$, the supply speed of the raw material, the rotational speed of the screw, and the like, a problem of outflow from the devolatilization port 12A to the outside of the cylinder 1 may occur. Therefore, it is desirable that the distance from the downstream end of the devolatilization port 12A to the upstream end of the seal ring $SR_3$ be appropriately set to a length that prevents the melt-kneaded product from flowing out from the devolatilization port 12A during operation of the kneading machine, in relation to the actually adopted operating conditions and the like. It is preferable that the distance in the conveying direction between the devolatilization port and the seal ring on the downstream side of the devolatilization port (for example, the distance between the position of the downstream end of the devolatilization port 12A and the position of the upstream end of the seal ring $SR_3$) is 1 to 30 times (more preferably 3 to 25 times) the diameter D of the screw.

In the screw 2, the length (distance in the conveying direction) between the downstream end of the seal ring $SR_2$ and the upstream end of the seal ring $SR_3$ is preferably 2 to 30 times (more preferably 4 to 25 times) the diameter D of the screw from the viewpoint of the removal speed of volatile components.

Furthermore, in the screw 2, a length (distance in the conveying direction) $L_3$ between a position of an upstream end of the seal ring $SR_1$ and a position of a downstream end of the raw material supply port is preferably 3 to 30 times (more preferably 5 to 25 times) the diameter D of the screw.

Other configurations such as the hopper 3 and the die are not particularly limited, and known ones can be appropriately used and arranged as appropriate to exhibit functions according to the purpose.

The kneading extruder of the embodiment shown in Fig. 1, as described above, uses a cylinder that has, as the cylinder 1, two devolatilization aid supply ports (11A, 11B) and two devolatilization ports for emitting volatile components (12A, 12B) as openings, and has two structural portions in which a devolatilization aid supply port and a devolatilization port are arranged spaced apart in order from the upstream side, and also

uses, as the screw 2, one having two screw configurations in which seal rings are respectively disposed in the supply port upstream portion within the cylinder located upstream of a position where the devolatilization aid supply port is provided, and in the supply port downstream portion located between the devolatilization aid supply port and the devolatilization port, when the screw configuration is considered with the positions of the devolatilization aid supply port and the devolatilization port in each of the structural portions as a reference.

By using such a cylinder 1, using the screw 2 with the arrangement positions of the seal rings $SR_{1-4}$ as described above, and setting the filling factor of the raw material to 70% (volume %) or more in at least one of the regions (region $A_1$ and/or $A_2$) within the cylinder 1 sandwiched by the seal rings SR, which is a region where introduction of the devolatilization aid is possible by the DA supply port (DA addition and kneading regions: regions $A_1$ and $A_2$), it becomes possible to knead the raw material of the resin composition and the devolatilization aid DA under high-pressure conditions in that region. This makes it possible to highly suppress the devolatilization aid DA from becoming a gaseous state (volatilized state) within the region during kneading, thereby making it possible to knead the devolatilization aid DA, whose liquid state is sufficiently maintained, with the raw material of the resin composition within the region. This enables the devolatilization aid DA to be more sufficiently dispersed and more uniformly distributed in the raw material during kneading within the region. Consequently, at the devolatilization port in the region further downstream than the seal ring (downstream seal ring) disposed in the supply port downstream portion, it becomes possible to devolatilize the volatile organic compound VOC at a higher level and more efficiently.

<Conveying and Kneading Step>

In the first embodiment, after preparing the kneading extruder shown in Fig. 1 as described above, the conveying and kneading step is performed using this kneading extruder.

When using the kneading extruder of the embodiment shown in Fig. 1 and operating it to perform the conveying and kneading step, first, while heating the cylinder 1 to a set temperature, the raw material of the resin composition is charged into the cylinder via the hopper 3. The charged raw material is conveyed by the full-flight screw SF in the conveying direction shown in Fig. 1, reaches a region where the kneading disc $KD_1$ is disposed, and in the region where the kneading disc $KD_1$ is disposed, the first melt-kneading of the raw material is performed. Next, the melt-kneaded raw material (melt-kneaded product) is conveyed by the downstream full-flight screw SF adjacent to the kneading disc $KD_1$ to a site where the seal ring $SR_1$ is disposed (a supply port upstream portion of the DA supply port 11A), passes through the site where the seal ring $SR_1$ is disposed, is conveyed into a region $A_1$ (a region where the kneading disc $KD_2$ is disposed: a first DA addition and kneading region), and is kneaded by the kneading disc $KD_2$. During such kneading in the region $A_1$, the devolatilization aid DA (preferably water) is added from the DA supply port 11A to knead the molten raw material and the liquid devolatilization aid DA. Then, when the melt-kneaded product (molten raw material) to which the liquid devolatilization aid DA has been added and kneaded passes through a site where the seal ring $SR_2$ on the downstream side of the region $A_1$ is disposed (a supply port downstream portion), it is conveyed further downstream by a full-flight screw SF disposed adjacent to and downstream of the seal ring $SR_2$. At this time, by the operation of a vacuum pump (not shown) connected to the devolatilization port 12A, the pressure (internal pressure of the melt-kneaded product) in a region near the devolatilization port (vent port) 12A (a vent portion) can be made a low pressure (preferably about 1 to 100 kPa). This makes it possible to vaporize the devolatilization aid DA from within the melt-kneaded product existing near the devolatilization port 12A and also to volatilize the volatile organic compounds, and these volatilized components can be emitted from the devolatilization port 12A. By using the devolatilization aid, the devolatilization aid in the raw material vaporizes and expands in the vent portion, and the surface area of the raw material is expanded. Therefore, the action of volatilizing and removing internal volatile components from the high-temperature surface of the raw material is improved, and it becomes possible to more efficiently volatilize the volatile organic compounds during devolatilization. Then, the raw material after being devolatilized in this manner is subsequently conveyed to a region where the seal ring $SR_3$ is disposed, passes through the region where

the seal ring $SR_3$ is disposed, is transported into a region $A_2$ (a region where the kneading disc $KD_3$ is disposed: a second DA addition and kneading region), and is kneaded by the kneading disc $KD_3$. In the region $A_2$, the devolatilization aid DA (preferably water) is added from the DA supply port 11B, and the molten raw material and the devolatilization aid DA are kneaded. Thereafter, when the melt-kneaded product (molten raw material) to which the devolatilization aid DA has been added passes through a region where the seal ring $SR_4$ on the downstream side of the region $A_2$ is disposed, it is conveyed further downstream by a full-flight screw SF disposed adjacent to and downstream of the seal ring $SR_4$. Then, by such conveyance, when passing through the position where the devolatilization port 12B is disposed, by the operation of a vacuum pump (not shown) connected to the devolatilization port 12B, the pressure in a region at least near the devolatilization port 12B can be made a low pressure. This makes it possible to volatilize the devolatilization aid and the volatile organic compounds from the raw material existing near the devolatilization port 12B, and these can be emitted from the devolatilization port 12B. In this way, after devolatilizing the volatile components (including volatile organic compounds), the melt-kneaded product after devolatilization is conveyed as it is to an outlet of the cylinder. After kneading the raw material while conveying it from the upstream side to the downstream side within the cylinder in this manner, the raw material is conveyed to the outlet of the cylinder, and from a die (not shown) connected to that outlet portion, it can be extruded to the outside to obtain a resin composition. As described, by using the kneading extruder and operating it, a resin composition can be obtained by kneading, while conveying, the raw material of the resin composition supplied into the cylinder 1 by the screw 2 from the upstream side to the downstream side.

In such a step, the raw material of the resin composition to be supplied into the cylinder is not particularly limited, and may be one containing at least one type of resin. Such a resin is preferably a thermoplastic resin, and examples thereof include polyolefin-based resins (polyethylene, polypropylene, etc.), polyamide-based resins, polyester-based resins, polycarbonate-based resins, acrylic-based resins, styrene-based resins, vinyl chloride-based resins, polyphenylene sulfide, polyphenylene oxide, and thermoplastic elastomers. The resin to be contained in the resin composition may be used singly, or two or more types may be combined. As the raw material of such a resin composition, a resin composition taken out from a discarded product may be used in order to reuse the resin composition. Components other than the resin in the resin composition are not particularly limited, and known components such as various fillers and pigments can be appropriately used according to the design of the intended resin composition. Regarding the raw material, a form consisting of a single resin that does not contain components such as fillers may be used as the resin composition (this is because even a single resin that does not contain fillers or the like can be recognized as a composition of a resin containing volatile organic compounds (volatile low-molecular-weight organic substances) such as monomers as impurities). Furthermore, the form of the raw material of such a resin composition is not particularly limited, but it is preferable to use one in pellet form or powder form because this makes melt-kneading easier.

The devolatilization aid DA is not particularly limited, and known components such as water, alcohols, and lower aliphatic hydrocarbons can be appropriately used. However, from the viewpoint of achieving a higher level of work safety, water is more preferable. When water is used as the devolatilization aid DA, the water may contain an additive.

In the conveying and kneading step, it is necessary to set the filling factor of the raw material to 70% or more (more preferably 80% or more, still more preferably 85 to 100%) in at least one region among the regions within the cylinder between the supply port upstream portion and the supply port downstream portion where the seal rings are disposed (DA addition and kneading regions) (if there are multiple DA addition and kneading regions, in at least one of them; on the other hand, if a DA addition and kneading region exists in only one place in the cylinder and does not exist in multiple places, then in that one DA addition and kneading region). If such a filling factor of the raw material is less than the lower limit, the residual amount of volatile organic compounds cannot be sufficiently reduced, and it becomes impossible to obtain the desired resin composition. In the present invention, as the "filling factor of the raw material," a value of the percentage (filling factor: volume %) at which the raw material fills the total volume of the DA addition and kneading region (the total volume of the space portion excluding the volume of the screw), which is determined by analysis using kneading simulation software (product of The Japan Steel Works, Ltd., trade name: TEX-FAN), is adopted. Such a filling factor can be adjusted by controlling the operation (including the feed rate of the raw material, etc.) according to the design of the kneading extruder. In the present invention, it is sufficient that the filling factor of the raw material is 70% or more in at least one DA addition and kneading region in the cylinder. However, since it becomes possible to remove (reduce) residual volatile organic compounds at a higher level, it is more preferable to set the filling factor of the raw material to 70% or more in all DA addition and kneading regions existing in the cylinder (all of regions $A_1$ and $A_2$ in the embodiment of Fig. 1).

Furthermore, in the conveying and kneading step, it is preferable to control the operation of the kneading extruder (including the feed rate of the raw material, etc.) according to the design of the kneading extruder such that in the region that is a DA addition and kneading region and where the filling factor of the raw material is 70% or more, a residence time of the raw material of the resin composition (melt-kneaded product) flowing into that region is 10 seconds or more (more preferably 20 seconds or more, still more preferably 30 seconds or more and 600 seconds or less) in that region. By setting the residence time of the raw material in the DA addition and kneading region within the above range, it becomes possible to more efficiently remove VOCs while suppressing thermal decomposition of the resin composition. As such a residence time (the residence time of the raw material from flowing into the region to flowing out), a value determined by analysis using kneading simulation software (product of The Japan Steel Works, Ltd., trade name: TEX-FAN) is adopted.

In the conveying and kneading step, it is preferable that an internal pressure of the raw material (molten resin composition) in the cylinder in the DA addition and kneading region is a pressure higher than a vapor pressure of the devolatilization aid at a temperature of the DA addition and kneading region. For example, if the devolatilization aid is water and the heating temperature is 170°C, since the saturated vapor pressure of water is 0.792 MPa, it is preferable that the pressure is higher than this. As described, by supplying (injecting) the devolatilization aid with the internal pressure of the resin composition in the DA addition and kneading region being higher than the vapor pressure of the devolatilization aid, volatilization of the devolatilization aid is sufficiently suppressed and its liquid state is easily maintained, which makes it possible to disperse and knead a sufficient amount of the liquid devolatilization aid into the resin composition.

The amount of the devolatilization aid to be added to the raw material (molten resin composition) existing in the DA addition and kneading region may be appropriately adjusted according to the type of raw material and the like, and is not particularly limited. However, from the viewpoint that it becomes possible to more efficiently remove VOCs while suppressing an excessive increase in kneading torque, it is preferably 0.01 to 20 parts by mass (more preferably 0.01 to 15 parts by mass, still more preferably 0.01 to 0.5 parts by mass, particularly preferably 0.02 to 0.3 parts by mass) with respect to 100 parts by mass of the raw material in the DA addition and kneading region.

In the conveying and kneading step, the supply speed of the raw material of the resin composition into the cylinder is not particularly limited, but is preferably 1 to 1000 kg/h (more preferably 2 to 800 kg/h). When such a supply speed of the raw material is at least the lower limit, a higher effect is tended to be obtained in terms of improving the processing speed compared to when it is less than the lower limit. On the other hand, when it is no more than the upper limit, a higher effect is tended to be obtained in terms of improving the VOC removal rate compared to when it exceeds the upper limit.

As described, by using the kneading extruder of the embodiment shown in Fig. 1, and in the step of kneading, while conveying, the raw material of the resin composition supplied into the cylinder 1 by the screw 2 from the upstream side to the downstream side, setting the filling factor of the raw material to 70% or more in at least one or both of the DA addition and kneading regions (regions within the cylinder between the supply port upstream portion and the supply port downstream portion where the seal ring SR is disposed: region $A_1$, region $A_2$ in Fig. 1), and also supplying the devolatilization aid DA to the raw material within the cylinder 1 from the devolatilization aid supply ports (11A, 11B) while emitting the volatile components that had been contained in the raw material from the devolatilization ports (12A, 12B), a resin composition in which volatile organic compounds have been devolatilized at a sufficiently high level can be obtained.

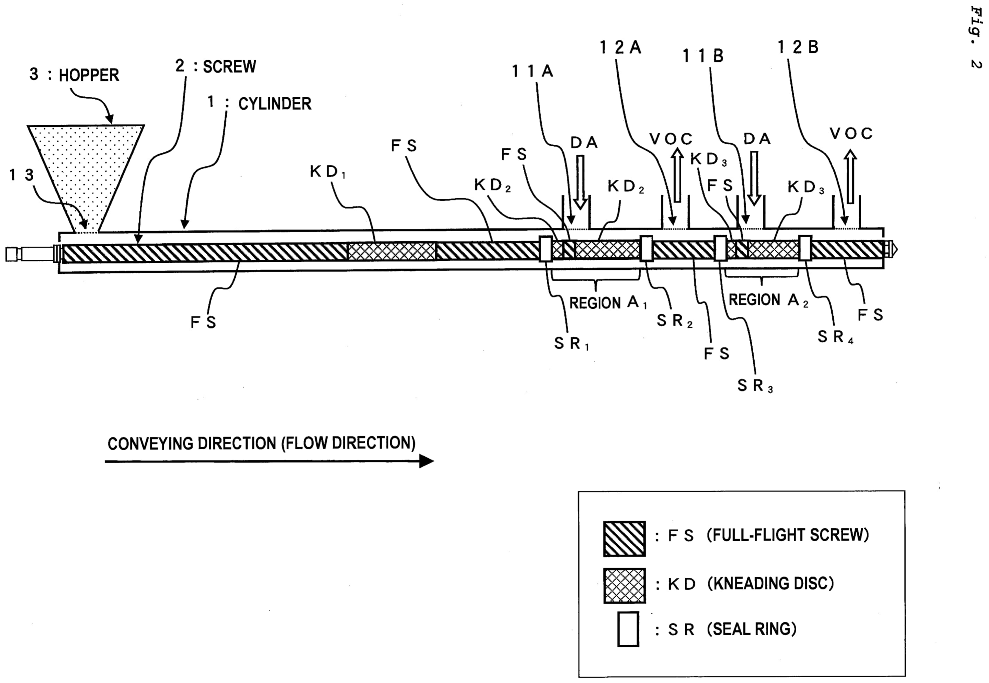

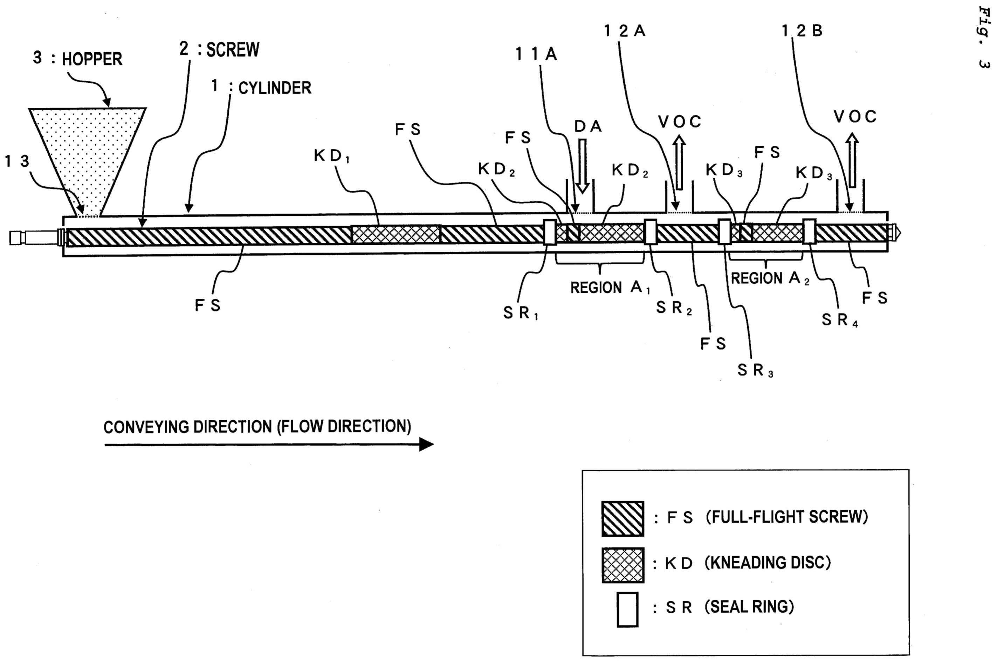

Although a preferred embodiment of the method for manufacturing a resin composition of the present invention has been described above based on Fig. 1, the method for manufacturing a resin composition of the present invention is not limited to the above embodiment. Hereinafter, other preferred embodiments of the method for manufacturing a resin composition of the present invention will be described based on Fig. 2 and Fig. 3.

(Second Embodiment)

In the second embodiment, basically, the same steps as in the first embodiment can be adopted, except that a kneading extruder of a form as shown in Fig. 2 is prepared in the kneading extruder preparation step, and a desired resin composition can be obtained thereby.

The kneading extruder of the embodiment shown in Fig. 2 is basically the same as the kneading extruder of the embodiment shown in Fig. 1, except for a length (distance in the conveying direction) $L_3$ between a position of an upstream end of the seal ring $SR_1$ and a position of a downstream end of the raw material supply port, and for the positional relationship of the arrangement of the two DA supply ports 11A and 11B and the two devolatilization ports (vent ports) 12A and 12B, and except that the screw configuration in the regions $A_1$ and $A_2$ (DA addition and kneading regions) is a configuration combining a kneading disc KD and a flight screw. In the embodiment shown in Fig. 2, the screw configuration is a configuration arranged in the order of FS, $KD_1$, FS, $SR_1$, $KD_2$, FS, $KD_2$, $SR_2$, FS, $SR_3$, $KD_3$, FS, $KD_3$, $SR_4$, FS from the upstream side toward the downstream side.

Here, in the kneading extruder of the embodiment shown in Fig. 2, the length between the position of the upstream end of the seal ring $SR_1$ and the position of the downstream end of the raw material supply port is longer compared to the embodiment shown in Fig. 1. However, the length (distance in the conveying direction) $L_3$ between the position of the upstream end of the seal ring $SR_1$ and the position of the downstream end of the raw material supply port is configured to fall within the same range as the aforementioned range (a range of 3 to 30 times (more preferably 5 to 25 times) the diameter D of the screw), and thereby, in a region upstream of the region $A_1$, a melt-kneaded product in which the raw material is sufficiently molten can be obtained. Making the length between the upstream end of the seal ring $SR_1$ and the downstream end of the raw material supply port longer is advantageous in that VOCs with a low boiling point can be removed in advance.

In the kneading extruder of the embodiment shown in Fig. 2, compared to the first embodiment, the positional relationship of the arrangement of the two DA supply ports 11A and 11B and the two devolatilization ports (vent ports) 12A and 12B is changed. This is due to the fact that in the embodiment shown in Fig. 2, the length between the upstream end of

the seal ring $SR_1$ and the downstream end of the raw material supply port is longer compared to the embodiment shown in Fig. 1. As such, one that has been appropriately designed to arrange the two DA supply ports 11A and 11B at positions where supply of the devolatilization aid DA is possible, and to arrange the two devolatilization ports (vent ports) 12A and 12B at positions where exhaust (removal) of volatile components is possible, can be appropriately used (the positions for arranging the DA supply ports 11A and 11B and the devolatilization ports 12A and 12B may be appropriately changed so that a desired function is obtained according to the various components used).

In the kneading extruder of the embodiment shown in Fig. 2, in each of the two DA addition and kneading regions (regions $A_1$ and $A_2$), the screw configuration is a configuration combining a kneading disc KD and a flight screw FS. When two kneading machines with the same L/D size for the DA addition and kneading region are prepared, and a case where the screw in the region combines a kneading disc KD and a flight screw FS is compared with a case where the screw in the region is composed only of a kneading disc KD, when the flight screw FS is combined, the residence time of the raw material in the DA addition and kneading region becomes shorter, and the filling factor of the raw material in the DA addition and kneading region tends to decrease, but it tends to be possible to diffuse the devolatilization aid over a wide range. Therefore, a configuration may be adopted in which the flight screw FS is used within an appropriate range in the screw configuration in the DA addition and kneading region, to the extent that it is possible to satisfy the condition of setting the filling factor of the raw material in the DA addition and kneading region to 70% or more during operation of the kneading extruder. In this case as well, it is preferable that conditions such as the residence time of the raw material satisfy the preferred conditions explained in the embodiment shown in Fig. 1.

Even when using the kneading extruder of the embodiment shown in Fig. 2, the conditions (including the preferred conditions thereof) adopted in the conveying and kneading step can basically be the same as those explained in the first embodiment. By using the kneading extruder of the embodiment shown in Fig. 2, and in the step of kneading, while conveying, the raw material of the resin composition supplied into the cylinder 1 by the screw 2 from the upstream side to the downstream side, setting the filling factor of the raw material to 70% or more in at least one or both of the DA addition and kneading regions, and also supplying the devolatilization aid DA to the raw material within the cylinder 1 from the devolatilization aid supply ports (11A, 11B) while emitting the volatile components that had been contained in the raw material from the devolatilization ports (12A, 12B), a resin composition in which volatile organic compounds have been devolatilized at a sufficiently high level can be obtained.

(Third Embodiment)

In the third embodiment, basically, the same steps as in the first embodiment can be adopted, except that a kneading extruder of a form as shown in Fig. 3 is prepared in the kneading extruder preparation step, and a desired resin composition can be obtained thereby.

The kneading extruder of the embodiment shown in Fig. 3 is basically the same as the kneading extruder of the embodiment shown in Fig. 2, except that it is not provided with a devolatilization aid supply port 11B. In the kneading extruder of the embodiment shown in Fig. 3, since the devolatilization aid supply port 11B is not provided, the devolatilization aid DA is not supplied in the region $A_2$. However, the raw material (melt-kneaded product) from which volatile components have been devolatilized from the devolatilization port 12A is allowed to flow into the region $A_2$, and in the region $A_2$, the raw material can be kneaded under high-temperature and high-pressure conditions. Therefore, residual volatile components can be removed from the raw material after passing through this region $A_2$ from the devolatilization port 12B.

Even when using the kneading extruder of the embodiment shown in Fig. 3, the conditions (including the preferred conditions thereof) adopted in the conveying and kneading step can basically be the same as those explained in the first embodiment. By using the kneading extruder of the embodiment shown in Fig. 3, and in the step of kneading, while conveying, the raw material of the resin composition supplied into the cylinder 1 by the screw 2 from the upstream side to the downstream side, setting the filling factor of the raw material to 70% or more in the DA addition and kneading region (region $A_1$), and also supplying the devolatilization aid DA to the raw material within the cylinder 1 from the devolatilization aid supply port (11A) while emitting the volatile components that had been contained in the raw material from the devolatilization ports (12A, 12B), a resin composition in which volatile organic compounds have been devolatilized at a sufficiently high level can be obtained.

Although preferred embodiments of the method for manufacturing a resin composition of the present invention have been described above based on Figs. 1-3, the method for manufacturing a resin composition of the present invention is not limited to the above embodiments. For example, in all of the methods for manufacturing a resin composition of the above embodiments, a kneading extruder of a form provided with two devolatilization ports is used. However, in the present invention, the kneading extruder may be one that:

comprises a cylinder and a screw disposed within the cylinder, the cylinder has at least one devolatilization aid supply port and at least one devolatilization port for emitting volatile components as openings, and has at least one structural portion in which the devolatilization aid supply port and the devolatilization port are arranged spaced apart in order from an upstream side,

the screw has at least one screw configuration in which seal rings are respectively disposed in a supply port upstream portion within the cylinder located upstream of a position where the devolatilization aid supply port of the at least one structural portion is provided, and in a supply port downstream portion located between the devolatilization aid supply port and the devolatilization port of the structural portion, and

in a region between the supply port upstream portion and the supply port downstream portion, no opening that communicates the region with an outside of the cylinder is provided, other than the devolatilization aid supply port that serves as a reference for the positions of the supply port upstream portion and the supply port downstream portion;

and the number of devolatilization ports does not have to be two. That is, it is sufficient that at least one devolatilization port is provided, and its number may be one, or may be multiple (two or more), according to the type of raw material and the like. Similarly, it is sufficient that at least one devolatilization aid supply port is provided, and its number is not particularly limited, and may be one, or may be multiple (two or more).

The screw used in the present invention may be one having at least one screw configuration in which seal rings are respectively disposed in a supply port upstream portion and a supply port downstream portion defined with at least one devolatilization aid supply port of the structural portion as a reference, where the devolatilization aid supply port and the devolatilization port are arranged spaced apart in order from the upstream side. The number of such screw configuration portions is not particularly limited, but the number may be one (one in the kneading extruder of the form shown in Fig. 3), or may be two or more (two in the kneading extruders of the forms shown in Figs. 1 and 2).

[Regarding a Preferred Embodiment of the Apparatus for Manufacturing a Resin Composition of the Present Invention]

The apparatus for manufacturing a resin composition of the present invention is as described above, and can be suitably used for the aforementioned method for manufacturing a resin composition of the present invention. That is, the apparatus for manufacturing a resin composition of the present invention can be suitably used as the kneading extruder prepared in the kneading extruder preparation step in the method for manufacturing a resin composition of the present invention.

The apparatus for manufacturing a resin composition of the present invention, in the conveying and kneading step, is equipped with a control device for controlling to supply a devolatilization aid to the raw material within the cylinder from the devolatilization aid supply port and to emit volatile components that had been contained in the raw material from the devolatilization port, while setting the filling factor of the raw material to 70% or more in at least one region among the regions within the cylinder between the supply port upstream portion and the supply port downstream portion where the seal rings are disposed. By means of this control device, the filling factor of the raw material and the like are controlled in at least one region among the regions within the cylinder between the supply port upstream portion and the supply port downstream portion where the seal rings are disposed.

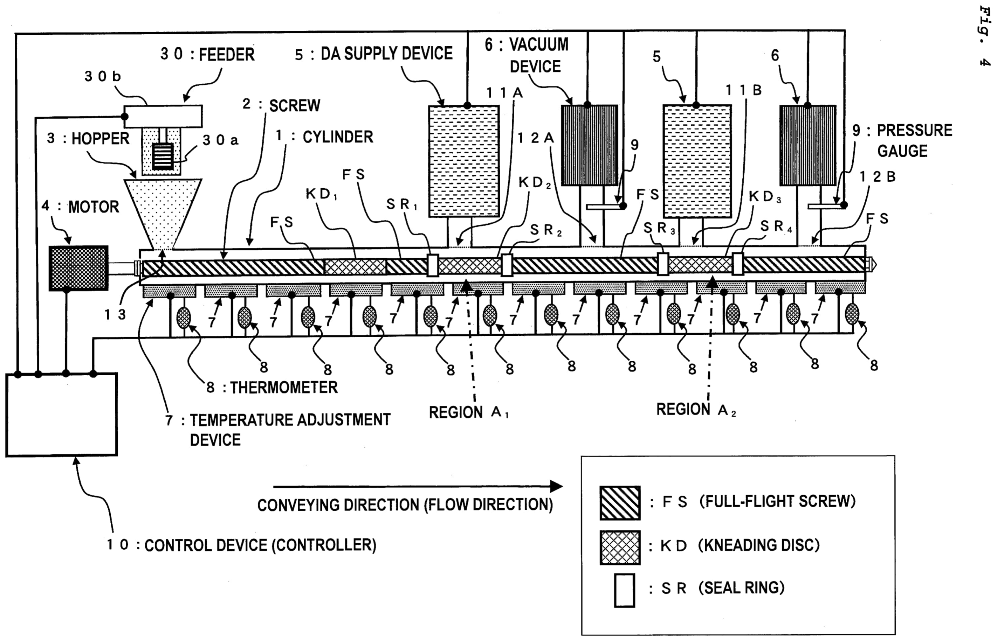

Hereinafter, a preferred embodiment of the apparatus for manufacturing a resin composition of the present invention will be described with reference to Fig. 4.

The apparatus for manufacturing a resin composition of the embodiment shown in Fig. 4 is a preferred form of the kneading extruder of the embodiment shown in Fig. 1. The apparatus of the form shown in Fig. 4 is a twin-screw kneading extruder, similar to that in Fig. 1, and in Fig. 4, similar to Fig. 1, for convenience, only the screw on one shaft side is depicted.

The apparatus for manufacturing a resin composition of the form shown in Fig. 4 is a twin-screw kneading extruder comprising: a cylinder 1; a screw 2 disposed within the cylinder 1; a hopper 3 installed at an opening for raw material supply of the cylinder 1; a feeder 30 as a raw material supply device for supplying a raw material into the cylinder 1 via the hopper 3 (in this embodiment, a feeder comprising a raw material supply screw 30a and a motor 30b for driving the screw 30a); a motor 4 as a screw-drive device (a rotation drive mechanism connected to the screw 2) for driving the screw 2; a DA supply device 5 (a supply device for a devolatilization aid DA) for supplying a devolatilization aid DA into the cylinder 1; a vacuum device (vacuum pump) 6 for emitting devolatilized components from a devolatilization port; a temperature adjustment device 7 for adjusting the temperature of the cylinder 1; a thermometer 8 for measuring the temperature of the cylinder; a pressure gauge (pressure sensor) 9 for measuring the pressure in a pipe connecting the vacuum device 6 and a devolatilization port (12A or 12B) of the cylinder; and a control device (controller) 10 electrically connected to the motor 30b comprised in the feeder 30, the motor 4 as the screw-drive device for driving the screw 2, the DA supply device 5, the vacuum device (vacuum pump) 6, the temperature adjustment device 7, the thermometer 8, and the pressure gauge 9. This twin-screw kneading extruder is an apparatus used for manufacturing a resin composition by kneading, while conveying, a raw material of the resin composition supplied into the cylinder by the screw from an upstream side to a downstream side.

The apparatus for manufacturing a resin composition of the form shown in Fig. 4 is a twin-screw kneading extruder (screw-type kneading devolatilizing extruder) comprising the cylinder 1 and the screw 2 disposed within the cylinder 1. Regarding the cylinder 1 and the screw 2, all conditions, including the positions and types of openings of the cylinder 1, the configuration of the screw 2, and the like, are the same as those explained in the form shown in Fig. 1 (for example, openings such as the two DA supply ports 11A and 11B, the two devolatilization ports (vent ports) 12A and 12B, and the raw material supply port 13, the conditions of the regions $A_1$ and $A_2$, the conditions of the screw such as the screw configuration, and the like are the same as those in the form shown in the aforementioned Fig. 1). Therefore, a description of the cylinder 1 and the screw 2 (including an explanation of the reference numerals) is omitted. For the hopper 3 as well, one that is the same as that explained in the form shown in Fig. 1 can be used.

The feeder 30 shown in Fig. 4 is used as a raw material supply device for supplying a raw material into the cylinder 1 via the hopper 3, and comprises a raw material supply screw 30a (a screw for adjusting the supply speed of the raw material) and a motor 30b for driving the screw 30a. In the kneading extruder of the embodiment shown in Fig. 4, it is possible to appropriately control the supply speed of the raw material into the cylinder by controlling the operation of the motor 30b of such a feeder (raw material supply device) (controlling the rotation speed of the motor 30b). Such a feeder is not particularly limited, and a known one can be appropriately used. A commercially available product may be used as such a feeder 30. In the kneading extruder of the form shown in Fig. 4, the motor 30b of the feeder 30 is electrically connected to the control device 10, which thereby makes it possible to control the operation of the motor 30b by the control device 10. Such a feeder 30 may also be provided with a mass meter. When using a mass meter in this way, the amount of raw material in the feeder 30 can be managed based on mass data, and it becomes possible to more accurately control the amount of raw material in the feeder 30, the supply speed of the raw material supplied into the cylinder via the hopper 3, and the like. Therefore, when using a type of feeder 30 provided with a mass meter, for management of the amount of raw material in the feeder 30, the mass data measured by the mass meter may be input to the control device 10, and the amount of raw material in the feeder may also be managed by the control device 10.

The motor 4 functions as a screw-drive device (rotation drive mechanism) for driving the screw 2, and is connected to the screw 2. Such a motor 4 as a screw-drive device is not particularly limited, and a known one used in the field of kneading extruders can be appropriately used. In the form shown in Fig. 4, the motor 4 is electrically connected to the control device 10, which thereby makes it possible to control the operation of the motor 4 by the control device 10 (control the rotation speed of the motor).

Furthermore, the two DA supply devices 5 are respectively used for supplying the devolatilization aid DA into the cylinder 1 from a DA supply port (11A or 11B). Therefore, each DA supply device 5 is connected to the cylinder so as to be able to supply the devolatilization aid DA into the cylinder 1 via a respective DA supply port (11A or 11B). Such a DA supply device 5 is not particularly limited, but for example, when the devolatilization aid DA is water, one equipped with a container for water storage and a gear pump for water injection connected to the container (a water injection device) may be used. A known one can be appropriately used as the DA supply device 5. For example, when using a gear pump as described above, a known one (which may be a commercially available product or the like) can be appropriately used as the gear pump. When using a DA supply device 5 of a form that uses a gear pump, the amount of water injection can be controlled to a desired amount by controlling the driving (operation) of the motor that rotates the gear. In the kneading extruder of the form shown in Fig. 4, the DA supply device 5 is electrically connected to the control device 10, which thereby makes it possible to control the operation of the DA supply device 5 by the control device 10 (for example, control the rotation speed of the motor of the gear pump), and also makes it possible to input data related to the operating status of the DA supply device 5 (control data) to the control device 10. Such data related to the operating status can be suitably used for managing the amount of the devolatilization aid DA in the container.

The two vacuum devices 6 are each used to reduce the pressure in a region near a devolatilization port (12A or 12B) (a vent portion) to a low pressure. Such a vacuum device 6 is not particularly limited, and a known one (a known vacuum pump or the like) used in the field of so-called vented extruders can be appropriately used. Here, in the form shown in Fig. 4, the vacuum device 6 is electrically connected to the control device 10, which thereby makes it possible to control the operation of the vacuum device 6 (a vacuum pump or the like) by the control device 10 (for example, control the rotation and the like of the drive motor of the vacuum pump).

The temperature adjustment device 7 is used to heat or cool the cylinder at its respective placement positions. Such a temperature adjustment device 7 is disposed on an outside of the cylinder 1 so as to be able to perform heating and the like of the cylinder. Such a temperature adjustment device 7 is not particularly limited, and a known heating/cooling means used in the field of extruders (for example, one consisting of a heater (which may be used as a heating/cooling means by heating during heater operation and allowing natural cooling when operation is stopped), one consisting of a heating means such as a heater and a cooling means such as a heat radiating fin, one configured to heat or cool a desired location by circulating a heat medium (heating liquid or cooling liquid), etc.) can be appropriately used.

Furthermore, the thermometer 8 is used to measure the temperature of the cylinder. Such a thermometer 8 is not particularly limited, and a known temperature measuring instrument (which may be a commercially available product) can be appropriately used. This thermometer 8 is connected to the control device 10, which thereby makes it possible to input the temperature data determined by the thermometer to the control device 10.

The pressure gauge (pressure sensor) 9 is used to measure the state of the pressure in a pipe connecting a devolatilization port (12A or 12B) and the vacuum device 6 (vacuum pump). Such a pressure gauge 9 is not particularly limited, and a known one can be appropriately used.

The control device 10 is electrically connected to the feeder 30 (particularly the motor 30b in the feeder 30), the motor 4, the DA supply device 5, the vacuum device (vacuum pump) 6, the temperature adjustment device 7, and the thermometer 8. Such a control device 10 is an apparatus used to control the operation of the motor 4, which is the screw-drive device, the feeder 30, which is the raw material supply device (more specifically, the motor 30b in the feeder 30), the DA supply device 5, and the temperature adjustment device 7, so as to supply the devolatilization aid DA to the raw material within the cylinder 1 from the devolatilization aid supply port and to emit the volatile components that had been contained in the raw material from the devolatilization port, while setting the filling factor of the raw material to 70% or more in at least one or both of the DA addition and kneading regions (the region within the cylinder between the supply port upstream portion and the supply port downstream portion where the seal rings SR are disposed: region $A_1$, region $A_2$), when kneading, while conveying, the raw material from the upstream side to the downstream side during the manufacturing of the resin composition.

Such a control device 10 may be any device capable of controlling the operation of each of the above devices as desired. For example, it may be composed of a computer configured by appropriately combining known peripheral devices such as a necessary CPU, ROM, RAM, and a program necessary for performing various calculations required for control (such a program may be, for example, recorded in the ROM for use, or may be recorded on another recording medium for use). Its specific configuration is not particularly limited, and one may be used that comprises hardware consisting of a CPU, memory, and the like, and a computer program (software) stored (installed) in the memory or the like for executing the necessary calculations, in order to execute the control of the operation of each device as described above. Examples of such a CPU include a central processing unit, a processing unit, a calculation unit, a processor, a microprocessor, a microcomputer, and a DSP (Digital Signal Processor).

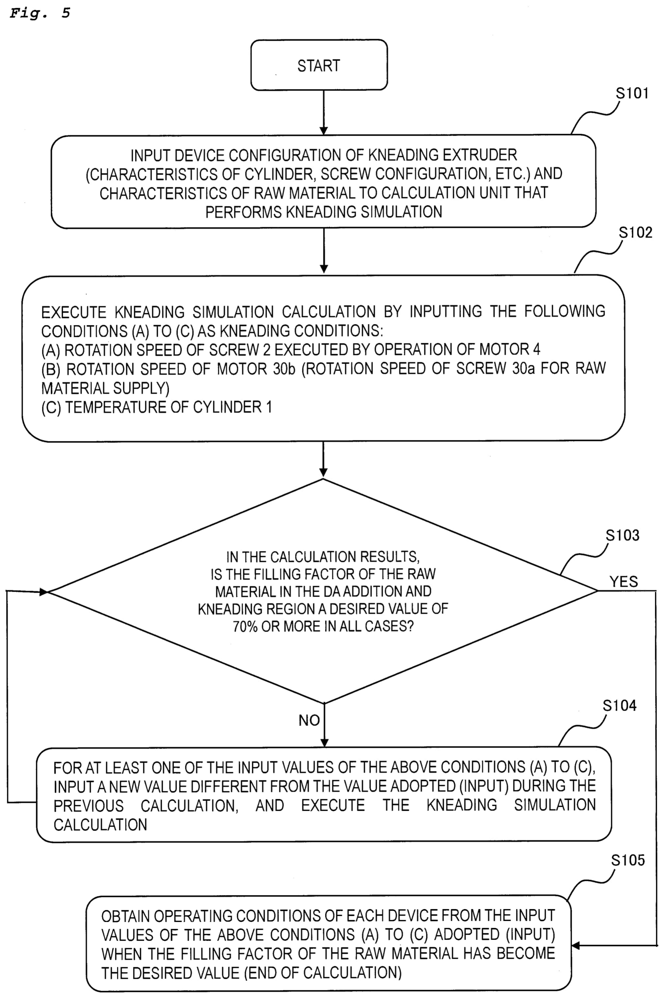

Here, in the control device 10, as a computer program (software) for causing the execution of calculations necessary for controlling the operation of the motor 4, which is the screw-drive device, the feeder 30, which is the raw material supply device (more specifically, the motor 30b in the feeder 30), the DA supply device 5, and the temperature adjustment device 7, a preferred example that can be cited is the use of a computer program programmed to operate the various devices so as to satisfy pre-determined conditions, based on input to the computer of temperature data and the like measured by the thermometer 8 during actual operation, after having pre-determined the operating conditions of the motor 4, the operating conditions of the motor 30b related to the raw material supply speed, the cylinder temperature conditions, and the like, which are necessary for being able to supply the devolatilization aid DA to the raw material within the cylinder 1 from the devolatilization aid supply port and to emit the volatile components that had been contained in the raw material from the devolatilization port, while setting the filling factor of the raw material to 70% or more in at least one or both of the DA addition and kneading regions (the region within the cylinder between the supply port upstream portion and the supply port downstream portion where the seal rings SR are disposed: region $A_1$, region $A_2$), according to the type of raw material, the screw configuration, and the like, when kneading, while conveying, the raw material from the upstream side to the downstream side during the manufacturing of the resin composition. A method for pre-determining the necessary conditions is not particularly limited. For example, the necessary operating conditions may be determined for being able to supply the devolatilization aid DA to the raw material within the cylinder 1 from the devolatilization aid supply port and to emit the volatile components that had been contained in the raw material from the devolatilization port, while setting the filling factor of the raw material to 70% or more in at least one or both of the DA addition and kneading regions (the region within the cylinder between the supply port upstream portion and the supply port downstream portion where the seal rings SR are disposed: region $A_1$, region $A_2$), according to the structure of the kneading extruder and the like, using kneading simulation software (product of The Japan Steel Works, Ltd., trade name: TEX-FAN). A specific method for determining such necessary operating conditions (control conditions) will be briefly explained below using Fig. 5. The flow shown in Fig. 5 is an example of a preferred procedure for determining the operating conditions for when the filling factor of the raw material in both of the DA addition and kneading regions, which are region $A_1$ and region $A_2$ within the cylinder of the kneading extruder shown in Fig. 4, is to be 70% or more.

Fig. 5 is a drawing (flowchart) showing a preferred embodiment of a procedure performed when determining the operating conditions of the various devices in the kneading extruder that are necessary, when using the kneading extruder shown in Fig. 4, for being able to supply a devolatilization aid DA to the raw material within the cylinder 1 from the devolatilization aid supply port and to emit the volatile components that had been contained in the raw material from the devolatilization port, while setting the filling factor of the raw material to 70% or more in both of the DA addition and kneading regions (the region within the cylinder between the supply port upstream portion and the supply port downstream portion where the seal rings SR are disposed: region $A_1$, region $A_2$), when kneading, while conveying, the raw material from the upstream side to the downstream side during the manufacturing of the resin composition. In the flow shown in Fig. 5, the calculation for determining such operating conditions is performed using a computer that is capable of calculation by kneading simulation software (product of The Japan Steel Works, Ltd., trade name: TEX-FAN).

In the flow shown in Fig. 5, in step S101, first, information on the device configuration of the kneading extruder (cylinder configuration, screw diameter, screw configuration, etc.) is input to a calculation unit within a computer that performs calculations using the kneading simulation software, and at the same time, the physical properties (PVT characteristics of the resin) of the components that will be the raw material of the resin composition are input.

Next, in step S102, the values of the following conditions (A) to (C) are input to the calculation unit as conditions (kneading conditions) planned to be adopted to make a desired region have a desired filling factor when using the kneading extruder, and a kneading simulation calculation is executed by the kneading simulation software (product of The Japan Steel Works, Ltd., trade name: TEX-FAN) in the calculation unit:

[Condition (A)] Rotation speed of the screw 2 (rotation speed of the motor 4, a numerical value that affects the residence time of the raw material in a specific region during kneading and conveyance of the raw material);
[Condition (B)] Rotation speed of the motor 30b of the feeder (rotation speed of the raw material supply screw 30a: a value for controlling the supply speed of the raw material) ;
[Condition (C)] Temperature of the cylinder 1.

The input values for the conditions (A) to (C) in step S102 are not particularly limited, and values that a person skilled in the art would estimate to be necessary to make the filling factor of the raw material in the DA addition and kneading region a desired value (70% or more) may be input.

Next, in step S103, based on the simulation results (content) output as the calculation results, it is determined whether or not the filling factor of the raw material in both of the DA addition and kneading regions (region $A_1$, region $A_2$) is a desired value of 70% or more in the conveying and kneading step. As a result of the determination in step S103, if the filling factor of the raw material is not the desired value, the process proceeds to step S104, and if it is the desired value, the process proceeds to step S105.

Here, if, as a result of the determination in step S103, the process proceeds to step S104, then in that step S104, based on the previous simulation results (calculation results), a new value different from the value adopted (input) during the previous simulation (calculation) is input for at least one of the input values of the above conditions (A) to (C), and a kneading simulation calculation is executed. The input of a new value for at least one of the input values of such conditions (A) to (C) may be done by inputting a value that is estimated to be an optimal value for making the filling factor of the raw material a desired value (70% or more), based on the results of the kneading simulation. The input of such a new value may be performed by a person skilled in the art inputting a value calculated from the calculation results of the kneading simulation so as to obtain a desired result, or it may be performed by providing another calculation unit within the computer that analyzes the calculation results so far and calculates a value that would be necessary to make the filling factor of the raw material in the DA addition and kneading regions (region $A_1$, region $A_2$) a desired value, and inputting the value determined by that other calculation unit to the calculation unit that performs calculations using the kneading simulation software.

Then, if, as a result of the determination in step S103, the filling factor of the raw material in both of the DA addition and kneading regions (region $A_1$, region $A_2$) is a desired value of 70% or more, the operating conditions of the motor 4, which is the screw-drive device, the feeder 30, which is the raw material supply device (more specifically, the motor 30b in the feeder 30), the DA supply device 5, and the temperature adjustment device 7 are obtained from e.g. the conditions adopted at that time, and the calculation is terminated.

By repeatedly executing a flow such as that shown in Fig. 5 multiple times for the same raw material, while appropriately changing the set value of the desired filling factor of the raw material in the DA addition and kneading region, operating conditions for satisfying various filling factor conditions can be obtained in advance. When operating conditions for satisfying various filling factor conditions are obtained in advance in this way, a computer program may be created that, based on the data of those operating conditions, when a numerical value for a desired filling factor is input to the control device 10, the control device 10 automatically calculates the operating conditions of each device necessary to satisfy that filling factor numerical value, and controls the operation of each device so as to satisfy those operating conditions, and this program may be stored in the memory of the computer that constitutes the control device 10. This also makes it possible to efficiently control each device by inputting a desired filling factor numerical value to the control device 10.

If the control device 10 is composed of a computer in which a computer program for controlling the operation of each device so as to satisfy the operating conditions determined as described above is stored, then during the manufacturing of the resin composition, the operation of each device can be controlled by the control device 10 so that the filling factor of the raw material in both of the DA addition and kneading regions (region $A_1$, region $A_2$) becomes a desired value of 70% or more. When controlling the operation of each device, for example, the temperature data of the cylinder determined by the thermometer 8 may be automatically input to the control device 10, and the operation of the temperature adjustment device 7 may be controlled so that the temperature of the cylinder becomes a necessary temperature, according to the state of change of that temperature.

When controlling the operation of each of these devices, the control device 10 also controls the operation of the DA supply device 5 and the operation of the vacuum device 6 so as to make the filling factor of the raw material in the DA addition and kneading region a desired value of 70% or more, and to supply the devolatilization aid DA to the raw material within the cylinder 1 from the devolatilization aid supply port, and to emit the volatile components that had been contained in the raw material from the devolatilization port. In order to perform such control of the operation of the DA supply device 5 and control of the operation of the vacuum device 6, it is preferable that the control device 10 comprises a computer program programmed to be able to control the operation of the DA supply device 5 and the vacuum device 6 so as to satisfy set conditions when the conditions for the target supply amount and supply speed of the devolatilization aid and the conditions for the desired pressure (internal pressure of the melt-kneaded product) in the region near the devolatilization ports (12A and 12B) (vent portion) by the vacuum device 6 are set. A computer program for such operation control may be appropriately created by applying known control methods for DA supply devices 5 (for example, a gear motor) and known control methods for vacuum devices 6, which are used in the field of vented extruders, so that adjustment to a desired supply amount or a desired pressure can be made. For example, the operation of the vacuum device 6 may be controlled so that the pressure can be maintained at a desired value by configuring the calculation unit in the control device 10 to change the operating status of the vacuum device 6 (for example, the rotation speed of the drive motor of the vacuum pump) so that the pressure at the measurement site becomes a desired magnitude, according to the value of the pressure data measured by the pressure gauge (pressure sensor) 9, which is input to the control device 10.

The apparatus for manufacturing a resin composition of the embodiment shown in Fig. 4 can execute the method for manufacturing a resin composition of the present invention by using it. Therefore, it can be said that the apparatus for manufacturing a resin composition of the present invention is, as described above, suitably usable for the method for manufacturing a resin composition of the present invention. The apparatus for manufacturing a resin composition of the embodiment shown in Fig. 4 is one preferred embodiment of the apparatus for manufacturing the resin composition of the embodiment shown in Fig. 1. Since a resin composition can be manufactured by adopting conditions similar to the conditions explained in the method for manufacturing a resin composition using the apparatus of the embodiment shown in Fig. 1, except that during the raw material conveying and kneading step, the control of the operation of each device constituting the kneading extruder (including the feed rate of the raw material, etc.) is performed by the control device 10 as described above, a description of a specific method for manufacturing a resin composition using the apparatus for manufacturing a resin composition of the embodiment shown in Fig. 4, such as the raw material conveying and kneading step, is omitted. (Using the feeder 30, motor 4, DA supply device 5, vacuum device 6, temperature adjustment device 7, etc., specifically shown in Fig. 4, except for controlling their operation with the control device 10 as described above, the conveying and kneading step may basically be performed in the same manner as the conditions adopted when using the kneading extruder of the embodiment shown in Fig. 1, and for preferred conditions of the step and the like, conditions similar to the conditions and the like explained in the step when using the apparatus of the embodiment shown in Fig. 1 can also be adopted).

Although the apparatus for manufacturing a resin composition of the embodiment shown in Fig. 4 has been described above, the apparatus for manufacturing a resin composition of the present invention is not limited to the above embodiment, and may be an apparatus comprising a kneading extruder that includes: a cylinder; a screw disposed within the cylinder; a screw-drive device for driving the screw; a raw material supply device for supplying a raw material into the cylinder; a devolatilization aid supply device for supplying a devolatilization aid into the cylinder; a temperature adjustment device for adjusting a temperature of the cylinder; and a control device that is electrically connected to the screw-drive device, the raw material supply device, the devolatilization aid supply device, and the temperature adjustment device, and is for controlling operation of each of the devices,

the cylinder having at least one devolatilization aid supply port and at least one devolatilization port for emitting volatile components as openings, and having at least one structural portion in which the devolatilization aid supply port and the devolatilization port are arranged spaced apart in order from an upstream side,
the screw having at least one screw configuration in which seal rings are respectively disposed in a supply port upstream portion within the cylinder located upstream of a position where the devolatilization aid supply port of the at least one structural portion is provided, and in a supply port downstream portion located between the devolatilization aid supply port and the devolatilization port of the structural portion,
the kneading extruder satisfying a condition that in a region between the supply port upstream portion and the supply port downstream portion where the seal rings are disposed, no opening that communicates the region with an outside of the cylinder is provided, other than the devolatilization aid supply port that serves as a reference for the positions of the supply port upstream portion and the supply port downstream portion,
the kneading extruder being an apparatus used for manufacturing a resin composition by kneading, while conveying, a raw material of the resin composition supplied into the cylinder by the screw from an upstream side to a downstream side, and
the control device being configured to, when manufacturing the resin composition and when kneading, while conveying, the raw material from the upstream side to the downstream side, control operation of the screw-drive device, the raw material supply device, the devolatilization aid supply device, and the temperature adjustment device so as to supply a devolatilization aid to the raw material within the cylinder from the devolatilization aid supply port and emit volatile components that had been contained in the raw material from the devolatilization port, while setting a filling factor of the raw material to 70% or more in at least one region within the cylinder between the supply port upstream portion and the supply port downstream portion where the seal rings are disposed;
and other configurations are not particularly limited.

[Examples]

Hereinafter, the present invention will be described more specifically based on Examples and Comparative Examples, but the present invention is not limited to the following Examples. In the Examples and Comparative Examples shown below, the same pelletized recycled polypropylene (separated and recovered from automobiles and home appliances) was used as the raw material in all cases.

(Example 1)

A resin composition (in pellet form) was obtained by kneading a raw material made of the recycled polypropylene using a twin-screw extruder (product of The Japan Steel Works, Ltd., trade name: TEX30, ratio of screw length L to screw diameter (outer diameter) D (L/D) = 77, maximum outer diameter of screw (screw diameter): 30 mm (nominal value), inner diameter of cylinder (cylinder diameter): 32 mm). The cylinder and screw were designed to be the same as those shown in Fig. 1 (a screw configuration arranged in the order of FS, $KD_1$, FS, $SR_1$, $KD_2$, $SR_2$, FS, $SR_3$, $KD_3$, $SR_4$, FS from the upstream side toward the downstream side), seal rings $SR_{1-4}$ with a diameter of 30-31 mm were used, and the clearance between the seal rings and the inner diameter of the cylinder at the seal ring placement positions was made to be 0.5-1 mm. In the twin-screw extruder, the ratio of the screw length $L_1$ to the screw diameter (outer diameter) D ($L_1$/D) of the portion of region $A_1$ shown in Fig. 1 was set to 7, the ratio of the screw length $L_2$ to the screw diameter (outer diameter) D ($L_2$/D) of the portion of region $A_2$ was set to 7, and the length $L_3$ between the position of the upstream end of the seal ring $SR_1$ and the position of the downstream end of the raw material supply port was set to 847.5 mm. Furthermore, in the screw 2, the length between the downstream end of the seal ring $SR_2$ and the upstream end of the seal ring $SR_3$ was set to 465 mm, and the ratio of the length to the diameter (length/diameter) of the portion constituted by the kneading disc $KD_1$ was set to 7.5. During the kneading of the raw material, the cylinder temperature was set to 170°C, the screw rotation speed was set to 150 rpm, the supply speed of the raw material to the cylinder was set to 5 kg/h , water was used as the devolatilization aid DA, the amount of water injected from the devolatilization aid supply port 11A was set to 14 parts by mass with respect to 100 parts by mass of the raw material in the cylinder 1, and the amount of water injected from the devolatilization aid supply port 11B was set to 14 parts by mass with respect to 100 parts by mass of the raw material in the cylinder 1 (the amount of water injection adopted was the amount determined from the ratio of the supply speed of the resin composition to the supply speed of the water). Furthermore, during the kneading of the raw material, the inside of the cylinder was depressurized by a water-sealed vacuum pump connected to the devolatilization ports (vent ports) 12A and 12B, and volatile components were removed from the devolatilization ports. When the filling factor of the raw material was determined by analysis using kneading simulation software (product of The Japan Steel Works, Ltd., trade name: TEX-FAN) for the two DA addition and kneading regions (regions $A_1$ and $A_2$), the filling factor of the raw material (volume %) in each region ($A_1$ and $A_2$) was 100%.
In Example 1, the kneading conditions adopted during the kneading of the raw material, namely, cylinder temperature: 170°C, screw rotation speed: 150 rpm, and supply speed of the raw material to the cylinder: 5 kg/h , were those determined by analyzing the kneading conditions (raw material supply speed, etc.) necessary to make the filling factor of the raw material (volume %) in both of the two DA addition and kneading regions (regions $A_1$ and $A_2$) 100%, using the procedure (flowchart) shown in Fig. 5 and kneading simulation software (product of The Japan Steel Works, Ltd., trade name: TEX-FAN). During the kneading of the raw material, the operation of a raw material supply device for supplying the raw material (not shown in Fig. 1: corresponding to the feeder 30 shown in Fig. 4 when referring to Fig. 4), a screw-drive device (a rotation drive mechanism for rotating the screw: not shown in Fig. 1: corresponding to the motor 4 shown in Fig. 4 when referring to Fig. 4), and a heater for adjusting the temperature in the cylinder (not shown in Fig. 1: corresponding to the temperature adjustment device 7 shown in Fig. 4 when referring to Fig. 4) was controlled by a computer electrically connected to them (not shown in Fig. 1: corresponding to the control device 10 shown in Fig. 4 when referring to Fig. 4), so that the cylinder temperature became 170°C, the screw rotation speed became 150 rpm, and the supply speed of the raw material to the cylinder became 5 kg/h. The operation of a device for supplying the devolatilization aid (not shown in Fig. 1: corresponding to the DA supply device 5 shown in Fig. 4 when referring to Fig. 4) was also controlled by a computer electrically connected to this device (not shown in Fig. 1: corresponding to the control device 10 shown in Fig. 4 when referring to Fig. 4), so that the amount of water injected from the devolatilization aid supply port 11A satisfied the above conditions. Furthermore, during the kneading of the raw material, the operation of a water-sealed vacuum pump connected to the devolatilization ports (vent ports) 12A and 12B (not shown in Fig. 1: a device such as that corresponding to the vacuum device 6 shown in Fig. 4 when referring to Fig. 4) was also controlled by a computer electrically connected to the water-sealed vacuum pump (not shown in Fig. 1: corresponding to the control device 10 shown in Fig. 4 when referring to Fig. 4), and the pressure inside the cylinder was thereby reduced.

(Example 2)

The design of the cylinder and screw was changed to be the same as that shown in Fig. 2 (the screw configuration was a screw configuration arranged in the order of FS, $KD_1$, FS, $SR_1$, $KD_2$, FS, $KD_2$, $SR_2$, FS, $SR_3$, $KD_3$, FS, $KD_3$, $SR_4$, FS from the upstream side toward the downstream side), the ratio of the screw length (corresponding to $L_1$ in Fig. 1) to the screw diameter (outer diameter) D ($L_1$/D) of the portion of region $A_1$ was changed to 8.25; the ratio of the screw length (corresponding to $L_2$ in Fig. 1) to the screw diameter (outer diameter) D ($L_2$/D) of the portion of region $A_2$ was changed to 6.25, the length between the position of the upstream end of the seal ring $SR_1$ and the position of the downstream end of the raw material supply port (the length of the portion corresponding to $L_3$ in Fig. 1) was changed to 1267.5 mm, the ratio of the length to the diameter (length/diameter) of the flight screw FS disposed in region $A_1$ was set to 1.25, the ratio of the length to the diameter of the flight screw FS disposed in region $A_2$ was set to 1.25, and the ratio of the length to the diameter (length/diameter) of the portion constituted by the kneading disc $KD_1$ was set to 8. Otherwise, kneading of the raw material was performed in the same manner as in Example 1 to obtain a resin composition. When the filling factor (volume %) of the raw material in regions $A_1$ and $A_2$ was determined in the same manner as in Example 1, the filling factor of the raw material in region $A_1$ was 93%, and the filling factor of the raw material in region $A_2$ was 87%.

(Example 3)

The design of the cylinder and screw was changed to be the same as that shown in Fig. 3 (a design the same as that shown in Fig. 2, except that the devolatilization aid supply port 11B was not formed), and except that water was injected only from the devolatilization aid supply port 11A, kneading of the raw material was performed in the same manner as in Example 2 to obtain a resin composition. When the filling factor (volume %) of the raw material in region $A_1$, where water was injected, was determined in the same manner as in Example 1, the filling factor was 93%.

(Comparative Example 1)

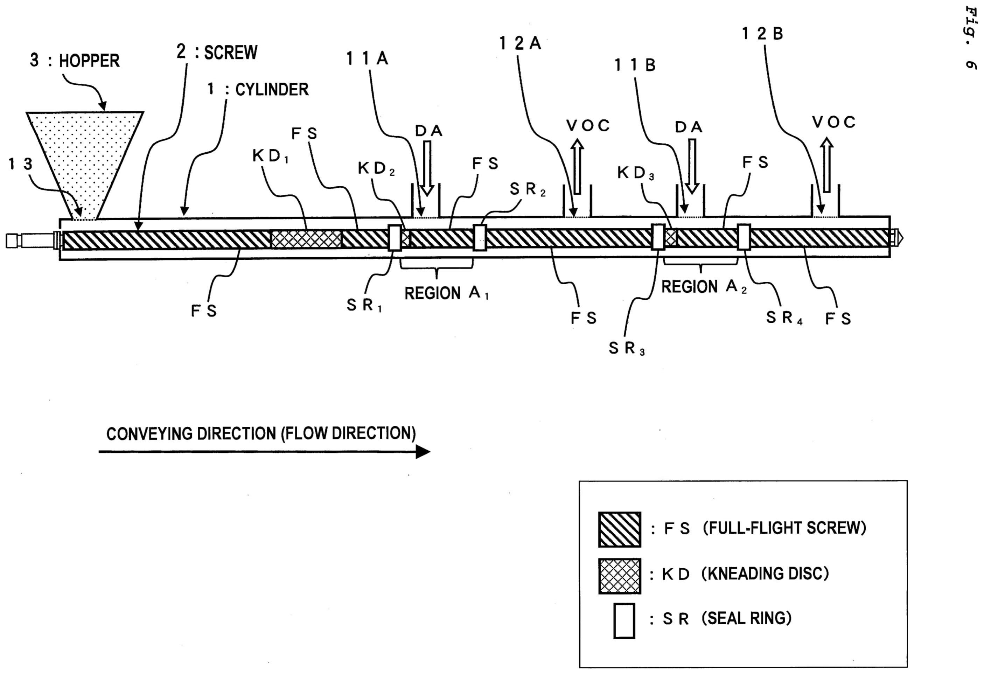

The design of the cylinder and screw was changed to be the same as that shown in Fig. 6 (the screw configuration was a screw configuration arranged in the order of FS, $KD_1$, FS, $SR_1$, $KD_2$, FS, $SR_2$, FS, $SR_3$, $KD_3$, FS, $SR_4$, FS from the upstream side toward the downstream side. Here, compared to Example 1, the ratio of the screw length and diameter of each of regions $A_1$ and $A_2$ (corresponding to $L_1$/D and $L_2$/D) was not changed, but the screw configuration in region $A_1$ was changed to one consisting of a kneading disc $KD_2$ and a flight screw FS, and the screw configuration in region $A_2$ was changed to one consisting of a kneading disc $KD_3$ and a flight screw FS), and except that the ratio of the length to the diameter (length/diameter) of the flight screw FS disposed in region $A_1$ was set to 6.5, and the ratio of the length to the diameter (length/diameter) of the flight screw FS disposed in region $A_2$ was set to 6.5, kneading of the raw material was performed in the same manner as in Example 1 to obtain a resin composition. When the filling factor (volume %) of the raw material in regions $A_1$ and $A_2$ was determined in the same manner as in Example 1, the filling factor of the raw material in region $A_1$ was 34%, and the filling factor of the raw material in region $A_2$ was 34%.

(Comparative Example 2)

A resin composition was obtained by performing kneading of the raw material in the same manner as in Comparative Example 1, except that the supply speed of the raw material to the cylinder was changed to 15 kg/h. When the filling factor (volume %) of the raw material in regions $A_1$ and $A_2$ was determined in the same manner as in Example 1, the filling factor of the raw material in region $A_1$ was 48%, and the filling factor of the raw material in region $A_2$ was 48%.

[Evaluation of Characteristics of Resin Compositions Obtained in Examples 1-3 and Comparative Examples 1-2]

Using the raw material recycled polypropylene (in pellet form) and the resin compositions (in pellet form) obtained in Examples 1-3 and Comparative Examples 1-2, respectively, as they were, samples for measurement thereof (20-50 mg) were respectively prepared. Using a thermal desorption (TD)-gas chromatograph mass spectrometer (apparatus configuration: TDU from Gerstel, and product name: 7890B GC-5977B MSD from Agilent), the gas components (volatilized organic compounds: volatile organic compounds) generated when the sample was heated at 80°C for 10 minutes were analyzed. The gas generated by heating by TD was concentrated and trapped in a cooled injection system (CIS, Tenax-TA packed in insert, temperature: -50°C), and then separated on a column (product of Agilent, trade name:

HP-5MS UI, length 30 m, inner diameter 0.25 mm, film thickness 0.25 $\mu$m) by rapidly heating the CIS from -50°C to 300°C at a heating rate of 720°C/min. He (flow rate: 1.5 mL/min) was used as the carrier gas for the column, and the temperature of the column was raised from 0°C to 300°C at a heating rate of 10°C/min. The components separated on the column were detected by a mass spectrometer (electron ionization method, ion source temperature: 230°C, MS quadrupole temperature: 150°C, scan range m/z value: 28.7-600). The integrated value of the total ion current (TIC) chromatogram in the m/z value range of 33-600 was defined as the amount of volatile organic compounds contained in the sample. For each sample of the raw material (pellets before kneading) and the resin composition obtained in each Example, etc. (pellets after kneading), the amount of volatile organic compounds contained per 1 mg of that sample was respectively determined, and the removal rate of volatile organic compounds (the proportion of volatile organic compounds removed from the raw material) was calculated by the following calculation formula (1):

$$[\text{Removal rate of volatile organic compounds (\%)}] =$$

$$(M_1 - M_2) / M_1 \quad (1)$$

(In formula (1), $M_1$ indicates the amount of volatile organic compounds contained per 1 mg of the raw material sample (the amount of volatile organic compounds in the raw material before devolatilization), and $M_2$ indicates the amount of volatile organic compounds contained per 1 mg of the sample of the resin composition after kneading obtained in an Example, etc. (the amount of volatile organic compounds remaining in the resin composition obtained after devolatilization).)

The obtained results are shown in Table 1.

Table 1 also shows the ratio of the length of the screw $L_1$ disposed in region $A_1$ where water was injected to the screw diameter D ($L_1$/D), and the ratio of the length of the screw $L_2$ disposed in region $A_2$ where water was injected to the screw diameter D ($L_2$/D), as well as the filling factor of the raw material (volume %) in region $A_1$ where water was injected and in region $A_2$ where water was injected.

[Table 1]

| | Filling factor of raw material in region $A_1$ (%) | Filling factor of raw material in region $A_2$ (%) | $L_1$/D | $L_2$/D | VOC removal rate (%) |
|---|---|---|---|---|---|
| Example 1 | 100 | 100 | 7 | 7 | 90 |
| Example 2 | 93 | 87 | 8.25 | 6.25 | 94 |
| Example 3 | 93 | (No water injection) | 8.25 | (No water injection) | 92 |
| Comparative Example 1 | 34 | 34 | 7 | 7 | 80 |
| Comparative Example 2 | 48 | 48 | 7 | 7 | 64 |

As is clear from the results shown in Table 1, in Examples 1-3, which adopted a method corresponding to the method for manufacturing a resin composition of the present invention where the filling factor of the raw material (melt-kneaded product) in the region for adding and kneading the devolatilization aid (water) (Examples 1-2: region $A_1$ and region $A_2$, Example 3: region $A_1$) is 70% or more, the volatile organic compounds (VOCs) in the raw material were efficiently removed at a high level (a high level with a removal rate of 85% or more) in the devolatilization step. It was confirmed that according to this method, it is possible to efficiently manufacture a resin composition with a sufficiently low residual amount of VOCs. In contrast, in the methods adopted in Comparative Examples 1-2, where the filling factor of the raw material (melt-kneaded product) in the region for adding and kneading the devolatilization aid (water) was in all cases less than 70%, the VOC removal rate was 48% or less, and it was not possible to sufficiently devolatilize and remove the volatile organic compounds (VOCs) .

[Industrial Applicability]

As explained above, according to the present invention, it is possible to provide a method for manufacturing a resin composition that can efficiently manufacture a resin composition with a sufficiently low residual amount of volatile organic compounds, and an apparatus for manufacturing a resin composition that can be suitably used for the method. Therefore, the method for manufacturing a resin composition of the present invention is useful, for example, as a method for manufacturing a recycled resin composition from which VOCs have been removed, or as a method for obtaining a deodorized resin composition by removing VOCs.

[Reference Signs List]

1: Cylinder
2: Screw
3: Hopper
4: Motor for driving screw 2
5: Devolatilization aid supply device
6: Vacuum device (vacuum pump)
7: Temperature adjustment device
8: Thermometer
9: Pressure gauge (pressure sensor)
10: Control device (controller)
11A and B: Devolatilization aid supply port
12A and B: Devolatilization port for emitting volatile components
13: Opening for raw material supply (raw material supply port)
30: Feeder
30a: Screw for raw material supply
30b: Motor for driving screw for raw material supply
FS: Full-flight screw
$KD_{1-3}$: Kneading disc
$SR_{1-4}$: Seal ring
DA: Devolatilization aid
VOC: Volatile organic compound.

**Claims**

1. A method for manufacturing a resin composition, comprising:

   a kneading extruder preparation step of preparing a kneading extruder that comprises a cylinder and a screw disposed within the cylinder,
   the cylinder having at least one devolatilization aid supply port and at least one devolatilization port for emitting volatile components as openings, and having at least one structural portion in which the devolatilization aid supply port and the devolatilization port are arranged spaced apart in order from an upstream side,
   the screw having at least one screw configuration in which seal rings are respectively disposed in a supply port upstream portion within the cylinder located upstream of a position where the devolatilization aid supply port of the at least one structural portion is provided, and in a supply port downstream portion located between the devolatilization aid supply port and the devolatilization port of the structural portion, and
   in a region between the supply port upstream portion and the supply port downstream portion where the seal rings are disposed, no opening that communicates the region with an outside of the cylinder is provided, other than the devolatilization aid supply port that serves as a reference for the positions of the supply port upstream portion and the supply port downstream portion; and
   a conveying and kneading step of using the kneading extruder to knead, while conveying, a raw material of the resin composition supplied into the cylinder by the screw from an upstream side to a downstream side,
   wherein, in the conveying and kneading step, a resin composition is obtained by setting a filling factor of the raw material to 70% or more in at least one region within the cylinder between the supply port upstream portion and the supply port downstream portion where the seal rings are disposed, supplying a devolatilization aid to the raw material within the cylinder from the devolatilization aid supply port, and emitting volatile components that had been contained in the raw material from the devolatilization port.

2. The method for manufacturing a resin composition according to claim 1, wherein in the conveying and kneading step, the filling factor of the raw material in the region within the cylinder between the supply port upstream portion and the supply port downstream portion where the seal rings are disposed is 80% or more.

3. The method for manufacturing a resin composition according to claim 1, wherein the devolatilization aid is water.

4. An apparatus for manufacturing a resin composition, comprising a kneading extruder that includes:

a cylinder;

a screw disposed within the cylinder;

a screw-drive device for driving the screw;

a raw material supply device for supplying a raw material into the cylinder;

a devolatilization aid supply device for supplying a devolatilization aid into the cylinder;

a temperature adjustment device for adjusting a temperature of the cylinder; and

a control device that is electrically connected to the screw-drive device, the raw material supply device, the devolatilization aid supply device, and the temperature adjustment device, and is for controlling operation of each of the devices,

the cylinder having at least one devolatilization aid supply port and at least one devolatilization port for emitting volatile components as openings, and having at least one structural portion in which the devolatilization aid supply port and the devolatilization port are arranged spaced apart in order from an upstream side,

the screw having at least one screw configuration in which seal rings are respectively disposed in a supply port upstream portion within the cylinder located upstream of a position where the devolatilization aid supply port of the at least one structural portion is provided, and in a supply port downstream portion located between the devolatilization aid supply port and the devolatilization port of the structural portion,

the kneading extruder satisfying a condition that in a region between the supply port upstream portion and the supply port downstream portion where the seal rings are disposed, no opening that communicates the region with an outside of the cylinder is provided, other than the devolatilization aid supply port that serves as a reference for the positions of the supply port upstream portion and the supply port downstream portion,

the kneading extruder being an apparatus used for manufacturing a resin composition by kneading, while conveying, a raw material of the resin composition supplied into the cylinder by the screw from an upstream side to a downstream side, and

the control device being configured to, when manufacturing the resin composition and when kneading, while conveying, the raw material from the upstream side to the downstream side, control operation of the screw-drive device, the raw material supply device, the devolatilization aid supply device, and the temperature adjustment device so as to supply a devolatilization aid to the raw material within the cylinder from the devolatilization aid supply port and emit volatile components that had been contained in the raw material from the devolatilization port, while setting a filling factor of the raw material to 70% or more in at least one region within the cylinder between the supply port upstream portion and the supply port downstream portion where the seal rings are disposed.

5. The apparatus for manufacturing a resin composition according to claim 4, wherein the kneading extruder further comprises a vacuum device connected to the devolatilization port,

the control device is also electrically connected to the vacuum device, and

the control device, when manufacturing the resin composition, controls operation of the screw-drive device, the raw material supply device, the devolatilization aid supply device, and the temperature adjustment device, and also controls operation of the vacuum device.

Fig. 1

Fig. 2

EP 4 678 366 A1

3 : HOPPER

2 : SCREW

1 : CYLINDER

13

11A

12A

11B

12B

FS

KD₁

FS

KD₂

FS

DA

KD₂

VOC

KD₃

DA

FS

KD₃

VOC

FS

REGION A₁

SR₁

SR₂

FS

SR₃

REGION A₂

SR₄

FS

CONVEYING DIRECTION (FLOW DIRECTION)

: FS (FULL-FLIGHT SCREW)

: KD (KNEADING DISC)

: SR (SEAL RING)

Fig. 3

CONVEYING DIRECTION (FLOW DIRECTION)

Legend:
- : F S (FULL-FLIGHT SCREW)
- : K D (KNEADING DISC)
- : S R (SEAL RING)

3 : HOPPER
2 : SCREW
1 : CYLINDER
13

FS
KD$_1$
FS
KD$_2$
SR$_1$
FS
KD$_2$
11A
DA
12A
VOC
REGION A$_1$
SR$_2$
FS
SR$_3$
KD$_3$
FS
KD$_3$
12B
VOC
REGION A$_2$
SR$_4$
FS

Fig. 4

*Fig. 5*

```
START
```

S101

INPUT DEVICE CONFIGURATION OF KNEADING EXTRUDER (CHARACTERISTICS OF CYLINDER, SCREW CONFIGURATION, ETC.) AND CHARACTERISTICS OF RAW MATERIAL TO CALCULATION UNIT THAT PERFORMS KNEADING SIMULATION

S102

EXECUTE KNEADING SIMULATION CALCULATION BY INPUTTING THE FOLLOWING CONDITIONS (A) TO (C) AS KNEADING CONDITIONS:
(A) ROTATION SPEED OF SCREW 2 EXECUTED BY OPERATION OF MOTOR 4
(B) ROTATION SPEED OF MOTOR 30b (ROTATION SPEED OF SCREW 30a FOR RAW MATERIAL SUPPLY)
(C) TEMPERATURE OF CYLINDER 1

S103

IN THE CALCULATION RESULTS, IS THE FILLING FACTOR OF THE RAW MATERIAL IN THE DA ADDITION AND KNEADING REGION A DESIRED VALUE OF 70% OR MORE IN ALL CASES?

YES

NO

S104

FOR AT LEAST ONE OF THE INPUT VALUES OF THE ABOVE CONDITIONS (A) TO (C), INPUT A NEW VALUE DIFFERENT FROM THE VALUE ADOPTED (INPUT) DURING THE PREVIOUS CALCULATION, AND EXECUTE THE KNEADING SIMULATION CALCULATION

S105

OBTAIN OPERATING CONDITIONS OF EACH DEVICE FROM THE INPUT VALUES OF THE ABOVE CONDITIONS (A) TO (C) ADOPTED (INPUT) WHEN THE FILLING FACTOR OF THE RAW MATERIAL HAS BECOME THE DESIRED VALUE (END OF CALCULATION)

Fig. 6

## INTERNATIONAL SEARCH REPORT

| International application No. |
| --- |
| **PCT/JP2024/004727** |

**A. CLASSIFICATION OF SUBJECT MATTER**

*B29B 7/84*(2006.01)i; *B29B 7/38*(2006.01)i; *B29B 7/48*(2006.01)i; *B29B 7/72*(2006.01)i; *B29B 7/80*(2006.01)i;
*B29B 7/88*(2006.01)i; *B29C 48/29*(2019.01)i; *B29C 48/40*(2019.01)i; *B29C 48/58*(2019.01)i; *B29C 48/76*(2019.01)i;
*B29C 48/92*(2019.01)i; *B29C 48/285*(2019.01)i; *B29C 48/395*(2019.01)i
FI:    B29B7/84; B29B7/88; B29B7/38; B29B7/72; B29C48/29; B29C48/395; B29C48/58; B29C48/92; B29C48/76;
B29B7/80; B29C48/40; B29C48/285; B29B7/48

According to International Patent Classification (IPC) or to both national classification and IPC

**B. FIELDS SEARCHED**

Minimum documentation searched (classification system followed by classification symbols)

B29B7/00-7/94; B29B9/00-9/16; B29C48/00-48/96

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 9-66524 A (MITSUBISHI GAS CHEMICAL COMPANY, INC.) 11 March 1997 (1997-03-11) entire text | 1-5 |
| A | WO 2012/108245 A1 (MITSUBISHI ENGINEERING PLASTICS CORP.) 16 August 2012 (2012-08-16) entire text | 1-5 |
| A | JP 2000-309019 A (JAPAN STEEL WORKS LTD.) 07 November 2000 (2000-11-07) entire text | 1-5 |
| A | JP 8-207118 A (JAPAN STEEL WORKS LTD.) 13 August 1996 (1996-08-13) entire text | 1-5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 April 2024** | **16 April 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

| International application No. |
|---|
| **PCT/JP2024/004727** |

**C.    DOCUMENTS CONSIDERED TO BE RELEVANT**

| Category* | Citation of document, with indication, where appropriate, of the relevant passages | Relevant to claim No. |
|---|---|---|
| A | JP 2021-62552 A (JAPAN STEEL WORKS LTD.) 22 April 2021 (2021-04-22) entire text | 1-5 |

Form PCT/ISA/210 (second sheet) (July 2022)

**INTERNATIONAL SEARCH REPORT**
Information on patent family members

International application No.

**PCT/JP2024/004727**

| Patent document cited in search report | | | Publication date (day/month/year) | Patent family member(s) | | | Publication date (day/month/year) |
|---|---|---|---|---|---|---|---|
| JP | 9-66524 | A | 11 March 1997 | US entire text | 5717055 | A | |
| WO | 2012/108245 | A1 | 16 August 2012 | CN entire text | 102781640 | A | |
| | | | | KR 10-2012-0101665 | | A | |
| JP | 2000-309019 | A | 07 November 2000 | (Family: none) | | | |
| JP | 8-207118 | A | 13 August 1996 | (Family: none) | | | |
| JP | 2021-62552 | A | 22 April 2021 | (Family: none) | | | |

Form PCT/ISA/210 (patent family annex) (July 2022)

**EP 4 678 366 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021062552 A